# EUROPÄISCHE PATENTSCHRIFT

(11) **EP 2 922 388 B1**
(45) Veröffentlichungstag und Bekanntmachung des Hinweises auf die Patenterteilung: **28.12.2016**
(21) Anmeldenummer: 14730429.9
(22) Anmeldetag: 05.06.2014
(51) Int. Cl.: A01G 25/09

(54) **VERFAHRBARE STÜTZE UND BERIESELUNGSANLAGE MIT EINER SOLCHEN STÜTZE**
MOVABLE SUPPORT AND IRRIGATION SYSTEM WITH SUCH A SUPPORT
SUPPORT MOBILE ET SYSTÈME D'IRRIGATION AVEC UN TEL SUPPORT

(30) Priorität: 01.07.2013 DE 102013010967
(43) Veröffentlichungstag der Anmeldung: 30.09.2015
(73) Patentinhaber: Kwl Blechverarbeitung GmbH, 56566 Neuwied (DE)
(72) Erfinder: MICHELS, Peter, 56767 Uersfeld (DE)
(74) Vertreter: Schlotter, Alexander Carolus Paul
(86) Internationale Anmeldenummer: PCT/EP2014/001527
(87) Internationale Veröffentlichungsnummer: WO 2015/000545

(56) Entgegenhaltungen:
- WO-A2-2006/060584
- US-A- 2 860 007
- US-A- 3 902 668
- US-A- 6 039 273

## Beschreibung

Die vorliegende Erfindung betrifft eine verfahrbare Stütze, eine Berieselungsanlage wenigstens mit einer dieser verfahrbaren Stützen und einer Rohrleitung, sowie ein Verfahren zum Betrieb der Berieselungsanlage. Die Erfindung wird im Zusammenhang mit der Bewässerung einer landwirtschaftlichen Nutzfläche beschrieben. Es wird darauf hingewiesen, dass die Erfindung vorteilhaft auch unabhängig von der Art des zu verteilenden Fluids, unabhängig vom Ort der Verteilung des Fluids und unabhängig vom Zweck der Verteilung des Fluids Verwendung finden kann.

Bekannt sind Berieselungsanlagen mit mehreren Fahrtürmen und mehreren Rohrleitungen zum Verteilen von Wasser, Insektiziden oder Dünger (Fluid) insbesondere auf einer landwirtschaftlichen Nutzfläche. Das Fluid strömt zeitweise durch die Rohrleitungen. Das Fluid wird entlang dieser Rohrleitungen in Richtung der landwirtschaftlichen Nutzfläche abgegeben durch Fluidauslässe, welche entlang dieser Rohrleitungen angeordnet sind. Die Rohrleitungen sind jeweils durch wenigstens einen Fahrturm abgestützt. Die Fahrtürme dienen der Bewegung der Rohrleitungen beim Abgeben des Fluids, insbesondere der Relativbewegung der Rohrleitungen bezüglich der landwirtschaftlichen Nutzfläche.

In der US 2,860,007 A wird eine durch Räder gestützte bewegliche Rohrleitung für Beregnungsanlagen gezeigt. Die Rohrleitung für Beregnungsanlagen weist voneinader beabstandete Stützvorrichtungen auf, wobei ein Arm einstellbar drehbar mit jeder der Stützvorrichtungen verbunden ist. Des Weiteren weist die Rohrleitung ineinadergreifende Sperrmittel und Endanschlagsmittel auf, wobei ein Laufrad einstellbar drehbar an einem Endteil jedes dieser Arme befestigt ist in im Wesentlichen gleichen Abständen von der oben erwähnten ersten einstellbaren drehbaren Verbindung, wobei entweder eines oder beide der Räder, welche zu jedem der Arme gedreht sind, in einer eingestellten Position arretiert werden können.

Die unzureichende Flexibilität bei der Berücksichtigung der Form der Fläche, auf welcher das Fluid zu verteilen ist, wird in der Regel als sehr problematisch empfunden.

Es ist die Aufgabe der Erfindung, die Flexibilität bei der Berücksichtigung der Form der Fläche, auf welcher das Fluid zu verteilen ist, zu erhöhen.

Die Aufgabe wird durch eine verfahrbare Stütze gemäß Anspruch 1 gelöst. Anspruch 9 beschreibt eine Berieselungsanlage mit wenigstens zwei dieser verfahrbaren Stützen. Die Aufgabe wird auch gelöst durch ein Betriebsverfahren für die Berieselungsanlage gemäß Anspruch 13 und ein Verfahren zum Nachrüsten einer vorhandenen Berieselungsanlage gemäß Anspruch 14. Zu bevorzugende Weiterbildungen der Erfindung sind Gegenstand der Unteransprüche.

Die erfindungsgemäße verfahrbare Stütze (erster Aspekt der Erfindung) ist ausgestaltet zum Abstützen wenigstens einer Rohrleitung, wobei die Rohrleitung insbesondere zur Abgabe eines Fluids dient.

Die verfahrbare Stütze weist eine Stützeinrichtung mit wenigstens drei Verbindungselementen auf, wobei vorzugsweise die Stützeinrichtung als Träger bzw. Halter für andere Einrichtungen bzw. Baugruppen der verfahrbaren Stütze dient.

Die verfahrbare Stütze weist eine Rohrhalterung auf, welche zur lösbaren Verbindung mit wenigstens einer, zwei oder mehreren dieser Rohrleitungen ausgestaltet ist. Die Rohrhalterung ist um eine erste Drehachse A₁ drehbar mit dem dritten Verbindungselement der Stützeinrichtung verbunden. Vorzugsweise liegt die erste Drehachse A₁ in einer Hauptebene E₁. Vorzugsweise ist die erste Drehachse A₁ während des Betriebs der verfahrbaren Stütze wenigstens zeitweise im Wesentlichen senkrecht zu der Verteilfläche ausgerichtet, auf welcher sich die verfahrbare Stütze bewegen kann. Vorzugsweise ist die erste Drehachse A₁ während des Betriebs der verfahrbaren Stütze wenigstens zeitweise im Wesentlichen parallel zur Richtung der Erdbeschleunigung ausgerichtet.

Die verfahrbare Stütze weist wenigstens zwei Bewegungseinrichtungen auf, welche jeweils mit dem ersten Verbindungselement oder dem zweiten Verbindungselement der Stützeinrichtung verbunden sind. Die wenigstens zwei Bewegungseinrichtungen sind zum Abrollen um jeweils eine dritte Drehachse A₃ ausgestaltet. Wenigstens eine oder beide dieser Bewegungseinrichtungen sind um jeweils eine zweite Drehachse A₂ drehbar mit der Stützeinrichtung verbunden. Die zweite Drehachse A₂ oder beide dieser zweiten Drehachsen A₂ sind im Wesentlichen parallel zu der ersten Drehachse A₁ angeordnet.

Bei einigen bekannten Berieselungsanlagen ist einer dieser Fahrtürme verdrehfest mit einem Ende einer dieser Rohrleitungen verbunden und der Fahrturm kann lediglich in einer Richtung senkrecht zur Längsachse der Rohrleitung bewegt werden. Einige bekannte Fahrtürme weisen zwei Räder auf, welche hintereinander angeordnet sind und deren Rotationsachsen parallel zur Längsachse der zugehörigen Rohrleitung fixiert sind. Damit geht eine eingeschränkte Manövrierbarkeit des Fahrturms einher.

Die erfindungsgemäße verfahrbare Stütze weist zusätzliche Freiheitsgrade auf. Indem wenigstens eine der Bewegungseinrichtungen um die zweite Drehachse A₂ drehbar ist, kann die verfahrbare Stütze gelenkt werden. Indem die Rohrhalterung um die erste Drehachse A₁ drehbar ist, kann die zugehörige Rohrleitung auch in eine Richtung bewegt werden, welche von der Senkrechten zur Längsachse der Rohrleitung abweicht. Damit geht eine verbesserte Manövrierbarkeit der verfahrbaren Stütze einher. Durch die verbesserte Manövrierbarkeit der verfahrbaren Stütze kann die zugehörige Rohrleitung auch über Teilflächen einer landwirtschaftlichen Nutzfläche bzw. einer Verteilfläche bewegt werden, welche außerhalb eines kreisförmigen oder rechteckigen Abschnitts der landwirtschaftlichen Nutzfläche bzw. der Verteilfläche liegen. So wird die zugrunde liegende Aufgabe gelöst.

### Begriffsbestimmungen

Unter einer verfahrbaren Stütze ist im Sinne der Erfindung eine Einrichtung zu verstehen, welche insbesondere zum Abstützen wenigstens einer Rohrleitung dient, welche insbesondere zum Bewegen der wenigstens einen Rohrleitung dient. Vorzugsweise ist die verfahrbare Stütze zum Abstützen und/oder Bewegen von zwei oder mehr Rohrleitungen ausgestaltet.

Unter einer Stützeinrichtung ist im Sinne der Erfindung eine Einrichtung zu verstehen, welche insbesondere als Träger bzw. Halter für andere Einrichtungen bzw. Baugruppen der verfahrbaren Stütze dient. Vorzugsweise weist die Stützeinrichtung wenigstens drei Verbindungselemente auf, welche zur Verbindung mit anderen Einrichtungen bzw. Baugruppen der verfahrbaren Stütze dienen, welche vorzugsweise in der Hauptebene E₁ angeordnet sind. Vorzugsweise ist die Stützeinrichtung mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Vorzugsweise ist die Stützeinrichtung mit wenigstens zwei drei oder mehr Profilstäben, welche miteinander insbesondere stoffschlüssig verbunden sind, oder als Gussteil ausgebildet. Besonders bevorzugt sind eines oder mehrere dieser Verbindungselemente insbesondere stoffschlüssig mit wenigstens einem dieser Profilstäbe verbunden. Besonders bevorzugt sind mehrere dieser Profilstäbe zu einem Fachwerk miteinander verbunden. Vorzugsweise ist wenigstens eines dieser Verbindungselemente ausgebildet mit einem Teil eines Wälzlagers, einem Bolzen, einer Ausnehmung, einem Durchgangsloch, einem Sackloch, einem Gewinde und/oder einem Teil einer beliebigen Gelenkverbindung bzw. eines beliebigen Gelenks besonders bevorzugt mit einem Schenkwinkel bis 360°.

Unter einer Rohrhalterung ist im Sinne der Erfindung eine Einrichtung zu verstehen, welche zur lösbaren Verbindung mit wenigstens einer, zwei oder mehreren dieser Rohrleitungen ausgestaltet ist, welche um eine erste Drehachse drehbar mit dem dritten Verbindungselement der Stützeinrichtung verbunden ist. Vorzugsweise dient die Rohrhalterung der fluidleitenden Verbindung zweier dieser Rohrleitungen. Vorzugsweise dient die Rohrhalterung der fluidleitenden Verbindung eine dieser Rohrleitungen mit einer Fluidquelle oder einer Pumpe. Vorzugsweise ist die Rohrhalterung mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Vorzugsweise ist die Rohrhalterung mit wenigstens einem Profilstab oder als Gussteil ausgebildet. Besonders bevorzugt sind mehrere dieser Profilstäbe zu einem Fachwerk miteinander verbunden. Vorzugsweise ist die Rohrhalterung mit einem Gegenstück zu dem dritten Verbindungselement ausgebildet, besonders bevorzugt mit einem Teil eines Wälzlagers, einem Bolzen, einer Ausnehmung, einem Durchgangsloch, einem Sackloch, einem Gewinde und/oder einem Teil einer beliebigen Gelenkverbindung bzw. eines beliebigen Gelenks besonders bevorzugt mit einem Schenkwinkel bis 360°. Vorzugsweise ist die Rohrhalterung zur lösbaren, besonders bevorzugt mechanischen und/oder fluidleitenden, Verbindung mit wenigstens einer oder zwei Rohrleitungen einer vorhandenen Berieselungsanlage ausgestaltet.

Unter einer Bewegungseinrichtung ist im Sinne der Erfindung insbesondere eine Einrichtung zu verstehen, welche die Bewegung der verfahrbaren Stütze sowie der verbundenen Rohrleitung, insbesondere entlang der landwirtschaftlichen Nutzfläche, dient. Die Bewegungseinrichtung ist mit dem ersten Verbindungselement oder dem zweiten Verbindungselement der Stützeinrichtung verbunden. Die wenigstens zwei Bewegungseinrichtungen sind zum Abrollen um jeweils eine dritte Drehachse A₃ ausgestaltet. Wenigstens eine der Bewegungseinrichtungen ist um eine zweite Drehachse A₂ drehbar mit der Stützeinrichtung verbunden. Die zweite Drehachse A₂ ist im Wesentlichen parallel zu der ersten Drehachse A₁ angeordnet. Vorzugsweise ist die Bewegungseinrichtung mit einem Gegenstück zu dem ersten oder zweiten Verbindungselement ausgebildet, besonders bevorzugt mit einem Teil eines Wälzlagers, einem Bolzen, einer Ausnehmung, einem Durchgangsloch, einem Sackloch und/oder einem Gewinde.

Unter einer Rohrleitung ist im Sinne der Erfindung insbesondere eine Einrichtung zu verstehen, welche der Führung eines zu verteilenden Fluids dient, welche insbesondere der Abgabe des zu verteilenden Fluids an die Umgebung der Rohrleitung bzw. an die Verteilfläche dient. Dazu weist die Rohrleitung eine Wandung zur Begrenzung eines Hohlraums bzw. Fluidkanals auf. Vorzugsweise erstreckt sich die Rohrleitung entlang einer Längsachse. Vorzugsweise weist die Rohrleitung eine im Wesentlichen kreisförmige Querschnittsfläche auf. Vorzugsweise ist dieser Hohlraum bzw. Fluidkanal im Wesentlichen zylindrisch. Die Rohrleitung weist wenigstens einen Fluidauslass auf, welcher in der Wandung angeordnet ist. Vorzugsweise weist die Rohrleitung mehrere dieser Fluidauslässe auf, welche entlang der Längsachse, besonders bevorzugt regelmäßig, beabstandet sind. Vorzugsweise ist der Fluidstrom durch wenigstens einen dieser Fluidauslässe mit einem steuerbaren Ventil begrenzbar. Besonders bevorzugt ist wenigstens eine der Fluidauslässe mit dem steuerbaren Ventil verschließbar. Vorzugsweise weist die Rohrleitung bzw. deren Wandung wenigstens einen Bund bzw. Flansch zur Verbindung mit der Rohrhalterung auf, wobei besonders bevorzugt je ein Bund bzw. Flansch an wenigstens einem Ende oder beiden gegenüberliegenden Enden der Rohrleitung angeordnet ist. Vorzugsweise ist die Rohrleitung bzw. deren Wandung mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Vorzugsweise ist die Rohrleitung als Gussteil ausgebildet.

Unter einem Fluid im Sinne der Erfindung sind insbesondere eine Flüssigkeit auch ein rieselfähiger Feststoff zu verstehen. Als "Fluid" im Sinne der Erfindung gelten insbesondere Wasser, Flüssigdünger, flüssige Chemikalien, flüssige Pestizide, rieselfähiger bzw. körniger Dünger, rieselfähige bzw. körnige Chemikalien, Getreide, Saatgut.

Unter einer Verteilfläche ist im Sinne der Erfindung insbesondere eine Fläche zu verstehen, an welche das Fluid abzugeben ist. Die Verteilfläche kann mehrere Teilflächen aufweisen. Vorzugsweise kann eine Teilfläche kreisförmig oder mehreckig ausgebildet sein.

Unter einem Koordinatenursprung ist im Sinne der Erfindung insbesondere der Ursprung (0;0) eines Koordinatensystems zu verstehen, wobei dieses Koordinatensystem wenigstens abschnittsweise in die Verteilfläche legbar ist.

Unter einem Ortsvektor ist im Sinne der Erfindung insbesondere ein Vektor zu verstehen, welcher vom Koordinatenursprung ausgehend an der zeitlich veränderlichen Position einer dieser verfahrbaren Stützen endet. Vorzugsweise reicht der Ortsvektor bis zum Schnittpunkt zwischen der Verteilfläche und der ersten Drehachse.

Unter einem Geschwindigkeitsvektor ist im Sinne der Erfindung insbesondere ein Vektor zu verstehen, welcher ausgehend vom Ortsvektor die Richtung, den Betrag und die Orientierung der Geschwindigkeit der verfahrbaren Stütze oder die zeitliche Veränderung des Ortsvektors angibt.

### Bevorzugte Weiterbildungen

Nachfolgend werden bevorzugte Weiterbildungen der Erfindung beschrieben.

Gemäß einer bevorzugten Weiterbildung sind die erste Drehachse A₁ und die zweite Drehachse A₂ im Wesentlichen parallel zu der Hauptebene E₁ angeordnet. Diese bevorzugte Weiterbildung bietet insbesondere den Vorteil, dass die Manövrierbarkeit der verfahrbaren Stütze verbessert ist. Diese bevorzugte Weiterbildung bietet insbesondere den Vorteil, dass mechanische Beanspruchungen der verfahrbaren Stütze bzw. einer der verbundenen Rohrleitungen verringert werden können.

Gemäß einer weiteren bevorzugten Weiterbildung, welche vorteilhaft mit einer der vorgenannten Weiterbildungen kombinierbar ist, ist wenigstens eine dieser dritten Drehachsen A₃ im Wesentlichen senkrecht zu einer dieser zweiten Drehachsen A₂ angeordnet. Diese bevorzugte Weiterbildung bietet insbesondere den Vorteil, dass die Manövrierbarkeit der verfahrbaren Stütze verbessert ist. Diese bevorzugte Weiterbildung bietet insbesondere den Vorteil, dass mechanische Beanspruchungen der verfahrbaren Stütze bzw. einer der verbundenen Rohrleitungen verringert werden können.

Gemäß einer weiteren bevorzugten Weiterbildung, welche vorteilhaft mit einer der vorgenannten Weiterbildungen kombinierbar ist, ist die Stützeinrichtung mit zwei, drei oder mehreren Profilstäben ausgebildet, welche zu einem Fachwerk verbunden sind. Alternativ ist die Stützeinrichtung ist die mit einer selbstragenden Trägerkonstruktion oder als Gussteil ausgebildet. Vorzugsweise bilden die wenigstens drei Verbindungselemente in der Hauptebene ein Dreieck. Vorzugsweise ist wenigstens einer dieser Profilstäbe oder das Gussteil mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Diese bevorzugte Weiterbildung bietet insbesondere den Vorteil, dass das Gewicht der verfahrbaren Stütze und/oder der zugehörigen Materialeinsatz verringert werden können.

Gemäß einer weiteren bevorzugten Weiterbildung, welche vorteilhaft mit einer der vorgenannten Weiterbildungen kombinierbar ist, ist die Rohrhalterung ausgebildet mit einem Gelenkstützelement, welches mit dem dritten Verbindungselement der Stützeinrichtung verbindbar ist, einer ersten Gelenkeinrichtung, welche Teil des Gelenkstützelements ist, welche zur Rotation um eine vierte Drehachse ausgestaltet ist, wobei die vierte Drehachse im Wesentlichen parallel zu der ersten Drehachse ausrichtbar ist, und vorzugsweise einer zweiten Gelenkeinrichtung, welche Teil des Gelenkstützelements ist, welche zur Rotation um eine fünfte Drehachse ausgestaltet ist, wobei die fünfte Drehachse im Wesentlichen senkrecht zu der vierten Drehachse ausgerichtet ist.

Vorzugsweise hält das Gelenkstützelement die erste Gelenkeinrichtung, ein Gegenstück zu dem dritten Verbindungselement der Stützeinrichtung sowie vorzugsweise die zweite Gelenkeinrichtung.

Vorzugsweise ist das Gelenkstützelement mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Vorzugsweise ist das Gelenkstützelement mit wenigstens zwei drei oder mehr Profilstäben, welche miteinander insbesondere stoffschlüssig verbunden sind, ausgebildet. Besonders bevorzugt sind mehrere dieser Profilstäbe zu einem Fachwerk miteinander verbunden. Alternativ ist das Gelenkstützelement mit einem Stranggussprofil, mit einem Abschnitt eines insbesondere kastenförmigen Profilträgers, mit einem Gussteil, mit einer selbsttragenden Trägerkonstruktion und/oder mit einer Platte ausgebildet.

Vorzugsweise dient die erste Gelenkeinrichtung zum Abwinkeln einer dieser Rohrleitungen bzgl. des Gelenkstützelements ausgestaltet mit einem Winkel α, dessen erster Schenkel im Wesentlichen parallel zu einer Längsachse einer der Rohrleitungen bzw. eines der Rohrverbindungsabschnitte ausgerichtet ist und dessen zweiter Schenkel durch das Gelenkstützelement bzw. eine zweite dieser Rohrleitungen legbar ist. Vorzugsweise sind die Schenkel des Winkels α in einer Winkelebene E₂ angeordnet, welche im Wesentlichen senkrecht zur ersten Drehachse ausgerichtet ist. Vorzugsweise ist die erste Gelenkeinrichtung mit einem Anschlag zur Begrenzung der Abwinkelung ausgestaltet, sodass 45° > αₘᵢₙ > 30° ist. Vorzugsweise dient die erste Gelenkeinrichtung zur Verringerung der Breite einer Berieselungsanlage mit wenigstens einer dieser verfahrbaren Stützen. Vorzugsweise dient die erste Gelenkeinrichtung zur Anpassung der Breite einer Berieselungsanlage mit wenigstens einer dieser verfahrbaren Stützen an die Breite eines Streifens der Verteilfläche. Vorzugsweise dient die erste Gelenkeinrichtung der Verringerung des Abstands zwischen zwei dieser verfahrbaren Stützen.

Vorzugsweise ist die erste Gelenkeinrichtung mit einem Anschlag zur Begrenzung der Abwinkelung ausgestaltet, sodass 178,5° > αₘₐₓ ist. Damit geht insbesondere der Vorteil einher, dass eine eindeutige Richtung für die Abwinkelung vorgegeben werden kann, insbesondere wenn die verfahrbare Stütze mit einer dieser zweiten Stelleinrichtungen ausgestaltet ist.

Vorzugsweise dient die zweite Gelenkeinrichtung zum Abwinkeln einer dieser Rohrleitungen bzgl. des Gelenkstützelements ausgestaltet mit einem Winkel β, dessen erster Schenkel im Wesentlichen parallel zu einer Längsachse einer der Rohrleitungen bzw. eines der Rohrverbindungsabschnitte ausgerichtet ist und dessen zweiter Schenkel durch das Gelenkstützelement bzw. eine zweite dieser Rohrleitungen legbar ist. Vorzugsweise sind die Schenkel des Winkels β in einer Ebene senkrecht zu der Winkelebene E₂ angeordnet. Vorzugsweise ist die zweite Gelenkeinrichtung mit einem Anschlag zur Begrenzung der Abwinkelung ausgestaltet, sodass βₘᵢₙ > 135° ist. Vorzugsweise dient die zweite Gelenkeinrichtung zur Anpassung einer Berieselungsanlage mit wenigstens einer dieser verfahrbaren Stützen an das Höhenprofil eines Streifens der Verteilfläche. Vorzugsweise dient die zweite Gelenkeinrichtung dazu, dass zwei benachbarte verfahrbare Stützen entlang unterschiedlicher Höhenlinien bewegt werden können.

Vorzugsweise ist wenigstens eine dieser Gelenkeinrichtungen ausgebildet mit einem Teil eines Wälzlagers, einem Bolzen, einer Ausnehmung, einem Durchgangsloch, einem Sackloch, einem Gewinde und/oder einem Teil einer beliebigen Gelenkverbindung bze. eines beliebigen Gelenks besonders bevorzugt mit einem Schenkwinkel bis 360°. Vorzugsweise ist wenigstens eine dieser Gelenkeinrichtungen mit wenigstens einem, vorzugsweise zwei gegenüberliegenden, plattenförmigen Abschnitt(en) ausgebildet, welche(r) sich aus dem Gelenkstützelement in Richtung einer zugehörigen Rohrleitung erstrecken.

Diese bevorzugte Weiterbildung bietet insbesondere den Vorteil, dass die mechanische Widerstandsfähigkeit bzw. die mechanische Belastbarkeit der Rohrhalterung verbessert sind. Diese bevorzugte Weiterbildung bietet insbesondere den Vorteil, dass das Gewicht der verfahrbaren Stütze und/oder der zugehörigen Materialeinsatz verringert werden können. Diese bevorzugte Weiterbildung bietet insbesondere den Vorteil, dass zwei Rohrleitungen, welche mit der Rohrhalterung verbunden sind, zueinander abgewinkelt werden können. Diese bevorzugte Weiterbildung bietet insbesondere den Vorteil, dass der Abstand zwischen zwei dieser verfahrbaren Stützen verändert werden kann. Diese bevorzugte Weiterbildung bietet insbesondere den Vorteil, dass die Manövrierbarkeit der verfahrbaren Stütze verbessert ist.

Gemäß einer weiteren bevorzugten Weiterbildung, welche vorteilhaft mit einer der vorgenannten Weiterbildungen kombinierbar ist, ist wenigstens eine oder beide dieser Bewegungseinrichtungen ausgebildet mit wenigstens einem oder zwei Laufrädern und/oder mit einer Gleiskette, und mit einem Achsträger, welcher mit dem ersten Verbindungselement oder mit dem zweiten Verbindungselement verbindbar ist, welcher zum Abstützen, vorzugsweise zum drehbaren Lagern, des Laufrads oder der Gleiskette dient.

Vorzugsweise ist das Laufrad mit einer profilierten Lauffläche, besonders bevorzugt mit Gummi ausgebildet. Alternativ ist das Laufrad zur Führung einer Gleiskette wie für einen Kettenantrieb etwa wie bei Baufahrzeugen ausgebildet.

Vorzugsweise sind wenigstens zwei dieser Laufräder hintereinander an einem gemeinsamen Achsträger angeordnet.

Vorzugsweise ist der Achsträger mit wenigstens einem Profilträger, besonders bevorzugt mit wenigstens einem U-Profil ausgebildet. Vorzugsweise ist der Achsträger mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz. Vorzugsweise ist der Achsträger mit einem Achsschenkel zum Abstützen eines Radlagers ausgebildet. Besonders bevorzugt trägt ein Profilträger das Gegenstück zum ersten oder zweiten Verbindungselement und ein weiterer Profilträger desselben Achsträgers den Achsschenkel.

Vorzugsweise ist wenigstens eine oder beide dieser Bewegungseinrichtungen ausgebildet mit je einer Antriebseinrichtung, ausgestaltet zum Antrieb der Bewegungseinrichtung, vorzugsweise des Laufrads oder der Gleiskette, wobei vorzugsweise die Antriebseinrichtung einen Elektromotor aufweist, wobei vorzugsweise die Antriebseinrichtung lösbar mit dem Achsträger verbindbar ist. Die Antriebseinrichtung dient insbesondere der Bewegung der verfahrbaren Stütze bezüglich der Verteilfläche bzw. der landwirtschaftlichen Nutzfläche. Besonders bevorzugt sind beide dieser Bewegungseinrichtungen mit je einer Antriebseinrichtung ausgebildet. Damit geht insbesondere der Vorteil einher, dass die Traktion zur Bewegung der verfahrbaren Stütze verbessert ist.

Diese bevorzugte Weiterbildung bietet insbesondere den Vorteil, dass die mechanische Belastbarkeit der Bewegungseinrichtung verbessert ist. Diese bevorzugte Weiterbildung bietet insbesondere den Vorteil, dass die Herstellung der Bewegungseinrichtung mit Halbzeugen erfolgen kann. Diese bevorzugte Weiterbildung bietet insbesondere den Vorteil, dass der Wechsel der Bewegungseinrichtung bei einem Defekt vereinfacht ist. Diese bevorzugte Weiterbildung bietet insbesondere den Vorteil, dass die Traktion zur Bewegung der verfahrbaren Stütze verbessert und/oder die auf die landwirtschaftliche Nutzfläche übertragbare Vortriebskraft vergrößert ist.

Gemäß einer weiteren bevorzugten Weiterbildung, welche vorteilhaft mit einer der vorgenannten Weiterbildungen kombinierbar ist, sind zwei dieser Bewegungseinrichtungen jeweils um eine zweite Drehachse drehbar mit der Stützeinrichtung verbunden.

Vorzugsweise sind die Bewegungseinrichtungen, besonders bevorzugt deren Achsträger, mit einer Koppelstange verbindbar, besonders bevorzugt derart verbindbar, dass die Bewegungseinrichtungen zueinander proportional lenkbar sind. Vorzugsweise weist die Koppelstange eine Kulissenführung und/oder eine Zahnstange zur Wechselwirkung mit der nachfolgend dargelegten ersten Stelleinrichtung auf.

Vorzugsweise ist eine erste Stelleinrichtung der verfahrbaren Stütze ausgestaltet zum Lenken wenigstens einer der Bewegungseinrichtungen, besonders bevorzugt ausgestaltet zum Stellen bzw. Lenken wenigstens eines der Achsträger und/oder zum Stellen der Koppelstange. Vorzugsweise ist die erste Stelleinrichtung mit der Stützeinrichtung und/oder der wenigstens einen Bewegungseinrichtung verbindbar. Vorzugsweise ist die erste Stelleinrichtung mit einem Kegelradantrieb und/oder einem Schneckengetriebe ausgebildet.

Vorzugsweise sind beide Bewegungseinrichtungen in entgegengesetzte Drehrichtung und/oder mit entgegengesetzten und gleich großen Lenkwinkeln einlenkbar. Vorzugsweise weisen die Achsschenkel Anlenkpunkte für die Koppelstange auf, wobei diese Anlenkpunkte sich entgegengesetzt bezüglich der Hauptebene erstrecken.

Diese bevorzugte Weiterbildung bietet insbesondere den Vorteil, dass die Verteilfläche, auf welcher die Bewegungseinrichtungen während des Betriebs abrollen, verringert ist. Diese bevorzugte Weiterbildung bietet insbesondere den Vorteil, dass die zweite, hintere Bewegungseinrichtung im Wesentlichen auf derselben Linie bzw. Fahrlinie abrollen kann, wie die erste, vordere Bewegungseinrichtung. Diese bevorzugte Weiterbildung bietet insbesondere den Vorteil, dass die Verdichtung der Verteilfläche bzw. der landwirtschaftlichen Nutzfläche auf eine kleinere Fläche begrenzt werden kann. Diese bevorzugte Weiterbildung bietet insbesondere den Vorteil, dass Schlupf in Richtung einer dritten Drehachse verringert werden kann.

Gemäß einer weiteren bevorzugten Weiterbildung, welche vorteilhaft mit einer der vorgenannten Weiterbildungen kombinierbar ist, ist wenigstens eine der Gelenkeinrichtungen, vorzugsweise die erste Gelenkeinrichtung, mit wenigstens einem Anschlagelement ausgebildet, wobei das Anschlagelement der Begrenzung der Rotation um die vierte Drehachse oder die fünfte Drehachse dient.

Vorzugsweise dient das Anschlagelement dazu, einen mindesten Winkel von etwa 30°, besonders bevorzugt wenigstens 45°, zwischen zwei Rohrleitungen, welche mit derselben Rohrhalterung verbunden sind, zu wahren.

Vorzugsweise ist das Anschlagelement mit zwei Zugstangen ausgebildet, welche besonders bevorzugt miteinander gelenkig verbunden sind.

Alternativ ist das Anschlagelement mit einem insbesondere biegsamen Zugkraftübertragungselement ausgebildet, besonders bevorzugt mit einem Seil, Gurt und/oder Band.

Alternativ ist das Anschlagelement durch einen Kegelantrieb und/oder ein Schneckenantrieb gebildet.

Diese bevorzugte Weiterbildung bietet insbesondere den Vorteil, dass die Manövrierbarkeit der verfahrbaren Stütze verbessert ist. Diese bevorzugte Weiterbildung bietet insbesondere den Vorteil, dass der Druckverlust im Fluidstrom beim Übergang von einer ersten Rohrleitung in eine benachbarte Rohrleitung verringert ist.

Gemäß einer weiteren bevorzugten Weiterbildung, welche vorteilhaft mit einer der vorgenannten Weiterbildungen kombinierbar ist, ist das dritte Verbindungselement mit einem Drehkranz und/oder die Stützeinrichtung mit einer Montageplatte ausgebildet. Vorzugsweise ist der Drehkranz mit der Montageplatte und/oder mit dem Gelenkstützelement verbindbar.

Besonders bevorzugt ist der Drehkranz sowohl mit der Montageplatte der Stützeinrichtung als auch mit dem Gelenkstützelement verbunden.

Diese bevorzugte Weiterbildung bietet insbesondere den Vorteil, dass die mechanische Belastbarkeit der verfahrbaren Stütze verbessert ist. Diese bevorzugte Weiterbildung bietet insbesondere den Vorteil, dass Kräfte, welche während des Betriebs auf das dritte Verbindungselement einwirken, besser aufgenommen werden können.

Gemäß einer weiteren bevorzugten Weiterbildung, welche vorteilhaft mit einer der vorgenannten Weiterbildungen kombinierbar ist, ist die Rohrhalterung mit zwei, vorzugsweise im Wesentlichen rohrförmigen oder schlauchförmigen, Rohrverbindungsabschnitten ausgebildet, wobei der erste Rohrverbindungsabschnitt mit der ersten Gelenkeinrichtung und der zweite Rohrverbindungsabschnitt mit der zweiten Gelenkeinrichtung verbindbar ist.

Die Rohrverbindungsabschnitte sind für das zu verteilende Fluid durchgängig. Vorzugsweise weisen die Rohrverbindungsabschnitte jeweils einen Bund bzw. Flansch oder eine Schlauchverbindung zur vereinfachten Verbindung mit einer dieser Rohrleitungen auf. Vorzugsweise ist wenigstens einer dieser Rohrverbindungsabschnitte mit einem Schlauchabschnitt oder einem Gussteil ausgebildet. Vorzugsweise ist wenigstens einer dieser Rohrverbindungsabschnitte bzw. dessen Wandung mit wenigstens einem oder mehreren Werkstoffen ausgebildet, welche in der folgenden Gruppe aufgeführt sind, welche beinhaltet Metalle, Stahl, verzinkten Stahl, Aluminium, Aluminiumlegierungen, Kunststoffe, Keramik, Verbundwerkstoffe, faserverstärkte Polymere, glasfaserverstärkte Kunststoffe, kohlefaserverstärkte Kunststoffe und Holz.

Vorzugsweise weist der erste Rohrverbindungsabschnitt und der zweite Rohrverbindungsabschnitt jeweils an einem ersten Ende einen Flansch auf, welcher der Verbindung mit einer dieser Rohrleitungen dient.

Vorzugsweise ist wenigstens eines dieser Anschlagelemente sowohl mit dem Gelenkstützelement als auch einem dieser Rohrverbindungsabschnitte verbindbar.

Vorzugsweise sind der erste Rohrverbindungsabschnitt und der zweite Rohrverbindungsabschnitt mit einem, besonders bevorzugt schlauchförmigen, dritten Rohrverbindungsabschnitt fluidleitend verbindbar. Besonders bevorzugt ist der dritte Rohrverbindungsabschnitt durch das Gelenkstützelement geführt. Besonders bevorzugt ist der dritte Rohrverbindungsabschnitt mit dem Gelenkstützelement verbindbar. Besonders bevorzugt ist der dritte Rohrverbindungsabschnitt durch das Gelenkstützelement abgestützt.

Vorzugsweise weist der erste Rohrverbindungsabschnitt und der zweite Rohrverbindungsabschnitt jeweils an einem ersten Ende einen Flansch auf, welcher der Verbindung mit dem dritten Rohrverbindungsabschnitt dient und zur Verbindung mit dem dritten Rohrverbindungsabschnitt angepasst ist. Dabei ist das erste Ende jeweils dem Gelenkstützelement zugewandt.

Vorzugsweise sind der erste Rohrverbindungsabschnitt und/oder der zweite Rohrverbindungsabschnitt zur, besonders bevorzugt fluidleitenden, Verbindung mit einer Rohrleitung einer vorhandenen Berieselungsanlage ausgestaltet. Besonders bevorzugt weist der erste Rohrverbindungsabschnitt und/oder der zweite Rohrverbindungsabschnitt an jeweils einem zweiten Ende einen auswechselbaren Flansch auf. Dabei ist das zweite Ende jeweils der Rohrleitung zugewandt.

Diese bevorzugte Weiterbildung bietet insbesondere den Vorteil, dass die erste und die zweite Gelenkeinrichtung mechanisch stabiler ausgebildet werden können. Diese bevorzugte Weiterbildung bietet insbesondere den Vorteil, dass Kräfte, welche während des Betriebs auf das die Rohrhalterung einwirken, besser aufgenommen werden können. Diese bevorzugte Weiterbildung bietet insbesondere den Vorteil, dass die Montage bzw. die Verbindung einer dieser Rohrleitungen mit der Rohrhalterung vereinfacht ist. Diese bevorzugte Weiterbildung bietet insbesondere den Vorteil, dass vorhandene Rohrleitungen wieder verwendet werden können.

Gemäß einer weiteren bevorzugten Weiterbildung, welche vorteilhaft mit einer der vorgenannten Weiterbildungen kombinierbar ist, weist die verfahrbare Stütze eine zweite Stelleinrichtung auf, welche ausgestaltet ist zum Stellen eines Winkels α, dessen erster Schenkel im Wesentlichen parallel zu einer Längsachse eines der Rohrverbindungsabschnitte bzw. einer der Rohleitungen, vorzugsweise des ersten Rohrverbindungsabschnittes, ausgerichtet ist und dessen zweiter Schenkel senkrecht zur Hauptebene ausgerichtet ist, wobei vorzugsweise die Schenkel des Winkels α in einer Winkelebene E₂ angeordnet sind, welche im Wesentlichen senkrecht zur ersten Drehachse ausgerichtet ist.

Vorzugsweise ist die zweite Stelleinrichtung ausgebildet mit einem Elektromotor, einem Hydraulikzylinder, einer Zahnstange, einer Kulissenführung, einem Kegelantrieb, einem Kegelradantrieb, einem Schneckengetriebe und/oder einer Schwalbenschwanzführung. Vorzugsweise ist die zweite Stelleinrichtung steuerbar, insbesondere durch eine Steuereinrichtung der Berieselungsanlage. Vorzugsweise ist die zweite Stelleinrichtung mechanisch und/oder gelenkig mit der Rohrhalterung, dem Gelenkstützelement, einer dieser Gelenkeinrichtungen und/oder einem dieser Rohrverbindungsabschnitte verbunden.

Diese bevorzugte Weiterbildung bietet insbesondere den Vorteil, dass die angetriebene Bewegungseinrichtung bei der Veränderung des Winkels α und/oder bei der Bewegung der verfahrbaren Stütze relativ zur Verteilfläche unterstützt werden kann. Diese bevorzugte Weiterbildung bietet insbesondere den Vorteil, dass die Ausbildung der Bewegungseinrichtung mit einer Antriebseinrichtung für die Bewegung der verfahrbaren Stütze relativ zur Verteilfläche verzichtet werden kann.

Gemäß einer weiteren bevorzugten Weiterbildung, welche vorteilhaft mit einer der vorgenannten Weiterbildungen kombinierbar ist, weist die verfahrbare Stütze eine, vorzugsweise elektrisch anzutreibende, Pumpe auf, welche zur Erhöhung des Drucks des abzugebenden Fluids dient. Vorzugsweise ist die Pumpe mit der Stützeinrichtung lösbar verbindbar. Vorzugsweise ist die Pumpe vor den Einlass einer Rohrleitung geschaltet. Vorzugsweise ist die Pumpe zwischen zwei dieser Rohrleitungen eingefügt. Vorzugsweise ist die Pumpe fluidleitend mit wenigstens einer dieser Rohrleitungen verbindbar. Vorzugsweise ist die Pumpe zwischen eine Fluidquelle und eine dieser Rohrleitungen eingefügt. Diese bevorzugte Weiterbildung bietet insbesondere den Vorteil, dass der Druck im abzugebenden Fluid vor dessen Eintritt in eine dieser Rohrleitungen erhöht werden kann werden wann. Diese bevorzugte Weiterbildung bietet insbesondere den Vorteil, dass ein Druckverlust entlang einer dieser Rohrleitungen wenigstens teilweise ausgeglichen werden kann.

Gemäß einer weiteren bevorzugten Weiterbildung, welche vorteilhaft mit einer der vorgenannten Weiterbildungen kombinierbar ist, weist die verfahrbare Stütze einen Fluidtank auf. Vorzugsweise ist der Fluidtank mit der Stützeinrichtung lösbar verbindbar. Vorzugsweise ist der Fluidtank mit wenigstens einer dieser Rohrleitungen verbindbar. Vorzugsweise ist der Fluidtank mit dieser Pumpe verbindbar. Vorzugsweise weist der Fluidtank ein zweites Fluid auf. Diese bevorzugte Weiterbildung bietet insbesondere den Vorteil, dass die Versorgung einer Berieselungsanlage mit dem abzugebenden Fluid vereinfacht ist. Diese bevorzugte Weiterbildung bietet insbesondere den Vorteil, dass dem zu verteilenden Fluid das zweite Fluid zugemischt werden kann.

### Berieselungsanlagen mit wenigstens einer dieser verfahrbaren Stützen

Gemäß einem zweiten Aspekt der Erfindung weist eine Berieselungsanlage wenigstens zwei dieser verfahrbaren Stützen und wenigstens eine erste dieser Rohrleitungen auf. Vorzugsweise ist die Berieselungsanlage ausgestaltet zum Verteilen eines Fluids auf einer Verteilfläche. Ein erstes Ende der ersten Rohrleitung ist mit der ersten verfahrbaren Stütze und ein zweites Ende der ersten Rohrleitung mit der zweiten verfahrbaren Stütze verbindbar.

Die Rohrleitung kann mittels der verfahrbaren Stützen abgestützt und relativ zur Verteilfläche bewegt werden. Mit dieser Ausbildung ist die Berieselungsanlage in der Lage, ein Fluid an eine Verteilfläche abzugeben.

Vorzugsweise ist die Berieselungsanlage bzw. deren Rohrleitung mit einer unabhängigen Fluidquelle verbindbar. Vorzugsweise kann zwischen die unabhängige Fluidquelle und die Rohrleitung eine unabhängige Schlauchleitung eingefügt werden.

Vorzugsweise weist die Berieselungsanlage eine Steuereinrichtung auf. Diese Steuereinrichtung ist ausgestaltet zum
- Vorgeben eines Geschwindigkeitsvektors für eine der verfahrbaren Stützen abhängig von einem ersten Ortsvektor der verfahrbaren Stütze, wobei der erste Ortsvektor auf die Position der verfahrbaren Stütze bzgl. des Koordinatenursprungs, vorzugsweise zu einem ersten Zeitpunkt, hinweist, und/oder
- Vorgeben des Geschwindigkeitsvektors für eine der verfahrbaren Stützen an einer ersten Position, welche durch den ersten Ortsvektor beschreibbar ist, abhängig von dem ersten Ortsvektor und einem zweiten Ortsvektor, wobei der zweite Ortsvektor auf die Position der verfahrbaren Stütze bzgl. eines Koordinatenursprungs zu einem späteren Zeitpunkt als dem ersten Zeitpunkt hinweist, und/oder
- Vorgeben einer Abrollgeschwindigkeit, mit welcher eine dieser Bewegungseinrichtungen um die dritte Drehachse abrollen soll, und/oder eines Lenkwinkels der Bewegungseinrichtung, abhängig vom Geschwindigkeitsvektor für die verfahrbare Stütze, wobei der Lenkwinkel zwischen der dritten Drehachse der Bewegungseinrichtung und der Hauptebene zu messen ist, und/oder
- Verringern des Betrags des Geschwindigkeitsvektors einer ersten dieser verfahrbaren Stützen, wenn der Betrag des Geschwindigkeitsvektors einer zweiten dieser verfahrbaren Stützen einen Grenzbetrag überschreitet, wobei vorzugsweise die zweite verfahrbare Stütze vom Koordinatenursprung weiter entfernt ist, als die erste verfahrbare Stütze, und/oder
- Vergrößern eines Fluidstroms durch eine dieser Rohrleitungen, vorzugsweise proportional, mit größerem Betrag des Geschwindigkeitsvektors einer dieser verfahrbaren Stützen, insbesondere umkehrbar, und/oder
- Vorgeben eines Winkels zwischen dem Geschwindigkeitsvektor der zweiten verfahrbaren Stütze und einem Radius ausgehend vom Koordinatenursprung durch den Ortsvektor der zweiten verfahrbaren Stütze in Abhängigkeit des Winkels zwischen dem Geschwindigkeitsvektor der ersten verfahrbaren Stütze und dem Radius.

Vorzugsweise ist die Berieselungsanlage mit einer Kommunikationseinrichtung ausgebildet. Die Kommunikationseinrichtung ist ausgestaltet zum Signalaustausch oder Datenaustausch mit einer unabhängigen Steuereinrichtung oder einer unabhängigen Kommunikationseinrichtung. Weiter ist die Kommunikationseinrichtung ausgestaltet zum Signalaustausch oder Datenaustausch mit der vorgenannten Steuereinrichtung der Berieselungsanlage. Vorzugsweise ist die Kommunikationseinrichtung ausgestaltet zum funkbasierten bzw. drahtlosen Signalaustausch oder Datenaustausch.

Vorzugsweise ist die Berieselungsanlage ausgestaltet, aus einem ersten Zustand, in welchem die Geschwindigkeitsvektoren der beiden verfahrbaren Stützen zueinander im Wesentlichen parallel sind, umkehrbar in einen zweiten Zustand überführt zu werden, in welchem die Geschwindigkeitsvektoren der beiden verfahrbaren Stützen zueinander nicht parallel sind. Im ersten Zustand können sich die verfahrbare Stützen in dieselbe Richtung bewegen und sind zur Translation der Rohrleitung in der Lage. Im zweiten Zustand können sich die verfahrbare Stützen in unterschiedliche Richtungen bewegen. Dabei kann eine bloße Rotation der Rohrleitung um eine Achse senkrecht zur Verteilfläche erfolgen. Im zweiten Zustand können Translation und Rotation der Rohrleitung auch überlagert sein. Vorzugsweise gibt die Steuereinrichtung den beiden verfahrbaren Stützen im zweiten Zustand unterschiedliche Geschwindigkeitsvektoren vor, wobei sich Richtung, Betrag und/oder Orientierung der Geschwindigkeitsvektoren von erster verfahrbaren Stütze und zweiter verfahrbaren Stütze unterscheiden können. Vorzugsweise schneiden sich die Geschwindigkeitsvektoren der beiden verfahrbaren Stützen im zweiten Zustand. Vorzugsweise sind die Geschwindigkeitsvektoren der beiden verfahrbaren Stützen im zweiten Zustand windschief, wodurch vorteilhaft Höhenunterschiede innerhalb der Verteilfläche ausgeglichen werden können.

Bei einigen bekannten Berieselungsanlagen ist einer dieser Fahrtürme verdrehfest mit einem Ende einer dieser Rohrleitungen verbunden und der Fahrturm kann lediglich in einer Richtung senkrecht zur Längsachse der Rohrleitung bewegt werden. Einige bekannte Fahrtürme weisen zwei Räder auf, welche hintereinander angeordnet sind und deren Rotationsachsen parallel zur Längsachse der zugehörigen Rohrleitung fixiert sind. Damit geht eine eingeschränkte Manövrierbarkeit des Fahrturms einher.

Die erfindungsgemäße verfahrbare Stütze weist zusätzliche Freiheitsgrade auf. Indem wenigstens eine der Bewegungseinrichtungen um die zweite Drehachse A₂ drehbar ist, können die verfahrbaren Stützen gelenkt werden. Indem die Rohrhalterung um die erste Drehachse A₁ drehbar ist, kann die zugehörige Rohrleitung auch in eine Richtung verlagert werden, welche von der Senkrechten zur Längsachse der Rohrleitung abweicht. Damit geht eine verbesserte Manövrierbarkeit der verfahrbaren Stütze bzw. der Berieselungsanlage einher. Durch die verbesserte Manövrierbarkeit der verfahrbaren Stützen kann die zugehörige Rohrleitung bzw. Berieselungsanlage auch über Teilflächen einer landwirtschaftlichen Nutzfläche bzw. einer Verteilfläche bewegt werden, welche außerhalb eines kreisförmigen oder rechteckigen Abschnitts der landwirtschaftlichen Nutzfläche bzw. Verteilfläche liegen.

Die Berieselungsanlage kann besser an veränderliche Breiten des Streifens, entlang welchem das Fluid an die Verteilfläche abzugeben ist, angepasst werden kann, insbesondere indem die Längsachse der Rohrleitung mit unterschiedlichen Winkeln zwischen 0° und 90° zu den Geschwindigkeitsvektoren der verfahrbaren Stützen angestellt werden kann. Mit spitzeren Winkeln ist die Breite des Streifens verringert. Diese Berieselungsanlage bietet insbesondere den Vorteil, dass ein Hindernis umfahren werden kann.

Eine bevorzugte Weiterbildung der Berieselungsanlage gemäß dem zweiten Aspekt, welche vorteilhaft mit einer der vorgenannten Weiterbildungen kombinierbar ist, weist eine dritte dieser verfahrbaren Stützen und eine zweite dieser Rohrleitungen auf. Ein erstes Ende der zweiten Rohrleitung ist mit der zweiten verfahrbaren Stütze und ein zweites Ende der zweiten Rohrleitung ist mit der dritten verfahrbaren Stütze verbindbar.

Die Berieselungsanlage weist zwei Rohrleitungen auf, welche durch eine der verfahrbaren Stützen bzw. deren Rohrhalterung fluidleitend und mechanisch miteinander verbunden sind. Damit ist die Berieselungsanlage gemäß dieser bevorzugten Weiterbildung wenigstens zeitweise breiter als die Berieselungsanlage gemäß dem zweiten Aspekt der Erfindung. Derart ausgebildet kann die Berieselungsanlage entlang eines breiteren Streifens der Verteilfläche bewegt werden. Bei dieser Ausbildung können die beiden Rohrleitungen zueinander umkehrbar abgewinkelt werden mithilfe, insbesondere einer der Gelenkeinrichtungen, der mittleren verfahrbaren Stütze. Bei dieser Ausbildung kann der Abstand zwischen der ersten verfahrbaren Stütze und der dritten verfahrbaren Stütze verändert werden, insbesondere zum Verringern der Breite des Streifens der Verteilfläche, insbesondere zum Ausweichen bzw. Umfahren eines Hindernisses.

Vorzugsweise ist die Berieselungsanlage ausgestaltet, aus einem ersten Zustand, in welchem die Geschwindigkeitsvektoren der verfahrbaren Stützen zueinander im Wesentlichen parallel sind, umkehrbar in einen zweiten Zustand überführt zu werden, in welchem die Geschwindigkeitsvektoren von wenigstens zwei der verfahrbaren Stützen zueinander nicht parallel sind. Im ersten Zustand können sich die verfahrbare Stützen in dieselbe Richtung bewegen und sind zur Translation der Rohrleitung in der Lage. Im zweiten Zustand können sich wenigstens zwei der verfahrbaren Stützen in unterschiedliche Richtungen bewegen. Dabei kann eine bloße Rotation der zugehörigen Rohrleitung um eine Achse senkrecht zur Verteilfläche erfolgen. Im zweiten Zustand können Translation und Rotation der Rohrleitung auch überlagert sein. Vorzugsweise gibt die Steuereinrichtung den wenigstens zwei verfahrbare Stützen im zweiten Zustand unterschiedliche Geschwindigkeitsvektoren vor, wobei sich Richtung, Betrag und/oder Orientierung der Geschwindigkeitsvektoren von erster verfahrbaren Stütze und zweiter verfahrbaren Stütze unterscheiden können. Vorzugsweise schneiden sich die Geschwindigkeitsvektoren der wenigstens zwei verfahrbare Stützen im zweiten Zustand. Vorzugsweise sind die Geschwindigkeitsvektoren der wenigstens zwei verfahrbare Stützen im zweiten Zustand windschief, wodurch vorteilhaft Höhenunterschiede innerhalb der Verteilfläche ausgeglichen werden können.

Diese bevorzugte Weiterbildung bietet insbesondere den Vorteil, dass die Berieselungsanlage zusätzliche Freiheitsgrade bei der Bewegung aufweist, für verbesserte Verteilung des Fluid bzw. für verbesserte Berücksichtigung von Teilflächen der Verteilfläche. Diese bevorzugte Weiterbildung bietet insbesondere den Vorteil, dass der für die Verteilung des Fluids erforderliche Zeitaufwand verringert ist. Diese bevorzugte Weiterbildung bietet insbesondere den Vorteil, dass die zugehörige Rohrleitung bzw. Berieselungsanlage auch über Teilflächen einer landwirtschaftlichen Nutzfläche bzw. einer Verteilfläche bewegt werden kann, welche außerhalb eines kreisförmigen oder rechteckigen Abschnitts der landwirtschaftlichen Nutzfläche bzw. Verteilfläche liegen. Diese bevorzugte Weiterbildung bietet insbesondere den Vorteil, dass eine der Rohrleitungen lediglich im Wesentlichen geradlinig bewegt werden kann, während bei der Bewegung der anderen Rohrleitung eine Translation zumindest überlagert sein kann.

Diese bevorzugte Weiterbildung bietet insbesondere den Vorteil, dass die Berieselungsanlage besser an veränderliche Breiten des Streifens, entlang welchem das Fluid an die Verteilfläche abzugeben ist, angepasst werden kann, insbesondere indem die Längsachse wenigstens einer der Rohrleitungen mit unterschiedlichen Winkeln zwischen 0° und 90° zu den Geschwindigkeitsvektoren der verfahrbaren Stützen angestellt werden kann. Mit spitzeren Winkeln ist die Breite des Streifens verringerbar. Diese bevorzugte Weiterbildung bietet insbesondere den Vorteil, dass das Verhältnis aus geringster Breite und größter Breite des Streifens kleiner ist. Diese bevorzugte Weiterbildung bietet insbesondere den Vorteil, dass ein Hindernis umfahren werden kann.

Gemäß einem dritten Aspekt der Erfindung weist eine Berieselungsanlage, welche vorzugsweise ausgestaltet ist zum Verteilen eines Fluids auf einer, insbesondere im Wesentlichen mehreckigen, Verteilfläche, wenigstens zwei dieser verfahrbaren Stützen und wenigstens zwei dieser Rohrleitungen auf. Die erste Rohrleitung ist mit der Rohrhalterung der ersten verfahrbaren Stütze verbindbar und mit einem unabhängigen Zentralturm, welcher auf der Verteilfläche angeordnet ist. Die erste Rohrleitung kann das zu verteilende Fluid aus dem Zentralturm aufnehmen. Die zweite Rohrleitung ist mit der Rohrhalterung der ersten verfahrbaren Stütze und mit der Rohrhalterung der zweiten verfahrbaren Stütze verbindbar.

Die Rohrleitungen können mittels der verfahrbaren Stützen abgestützt und relativ zur Verteilfläche bewegt werden. Bei dieser Ausbildung ist die Berieselungsanlage in der Lage, das Fluid an die Verteilfläche abzugeben. Die Berieselungsanlage weist zwei Rohrleitungen auf, welche durch eine der verfahrbaren Stützen bzw. deren Rohrhalterung fluidleitend und mechanisch miteinander verbunden sind. Derart ausgebildet kann die Berieselungsanlage entlang eines breiteren Streifens der Verteilfläche bewegt werden. Bei dieser Ausbildung können die beiden Rohrleitungen zueinander umkehrbar abgewinkelt werden mithilfe einer der Gelenkeinrichtungen der mittleren verfahrbaren Stütze.

Ein Ende der Berieselungsanlage kann mechanisch und fluidleitend mit dem Zentralturm verbunden sein und durch diese Verbindung in seiner Bewegungsfreiheit bzw. Manövrierbarkeit eingeschränkt sein. Damit geht aber der Vorteil einher, dass die Versorgung der Berieselungsanlage mit dem zu verteilenden Fluid vereinfacht ist. Dabei ist eine erste dieser Rohrleitungen, insbesondere deren erstes Ende, mit dem Zentralturm mechanisch und/oder fluidleitend verbunden. Das zweite Ende der ersten Rohrleitung ist mit der ersten verfahrbaren Stütze mechanisch und/oder fluidleitend verbunden. Die zweite Rohrleitung ist mit der ersten und der zweiten verfahrbaren Stütze mechanisch und/oder fluidleitend verbunden. Bei weiteren Erläuterungen zu der Berieselungsanlage gemäß dem dritten Aspekt der Erfindung wird die erste verfahrbare Stütze auch "innere verfahrbare Stütze" und die zweite verfahrbare Stütze auch "äußere verfahrbare Stütze" genannt. Bei weiteren Erläuterungen zu der Berieselungsanlage gemäß dem dritten Aspekt der Erfindung wird die erste Rohrleitung auch "innere Rohrleitung" und die zweite Rohrleitung auch "äußere Rohrleitung" genannt.

Vorzugsweise weist die Berieselungsanlage eine Steuereinrichtung auf. Diese Steuereinrichtung ist ausgestaltet zum
- Vorgeben eines Geschwindigkeitsvektors für eine der verfahrbaren Stützen abhängig von einem ersten Ortsvektor der verfahrbaren Stütze, wobei der erste Ortsvektor auf die Position der verfahrbaren Stütze bzgl. des Koordinatenursprungs, vorzugsweise zu einem ersten Zeitpunkt, hinweist, und/oder
- Vorgeben des Geschwindigkeitsvektors für eine der verfahrbaren Stützen an einer ersten Position, welche durch den ersten Ortsvektor beschreibbar ist, abhängig von dem ersten Ortsvektor und einem zweiten Ortsvektor, wobei der zweite Ortsvektor auf die Position der verfahrbaren Stütze bzgl. eines Koordinatenursprungs zu einem späteren Zeitpunkt als dem ersten Zeitpunkt hinweist, und/oder
- Vorgeben einer Abrollgeschwindigkeit, mit welcher eine dieser Bewegungseinrichtungen um die dritte Drehachse abrollen soll, und/oder eines Lenkwinkels der Bewegungseinrichtung, abhängig vom Geschwindigkeitsvektor für die verfahrbare Stütze, wobei der Lenkwinkel zwischen der dritten Drehachse der Bewegungseinrichtung und der Hauptebene zu messen ist, und/oder
- Verringern des Betrags des Geschwindigkeitsvektors einer ersten dieser verfahrbaren Stützen, wenn der Betrag des Geschwindigkeitsvektors einer zweiten dieser verfahrbaren Stützen einen Grenzbetrag überschreitet, wobei vorzugsweise die zweite verfahrbare Stütze vom Koordinatenursprung weiter entfernt ist, als die erste verfahrbare Stütze, und/oder
- Vergrößern eines Fluidstroms durch eine dieser Rohrleitungen, vorzugsweise proportional, mit größerem Betrag des Geschwindigkeitsvektors einer dieser verfahrbaren Stützen, insbesondere umkehrbar, und/oder
- Vorgeben eines Winkels zwischen dem Geschwindigkeitsvektor der zweiten verfahrbaren Stütze und einem Radius ausgehend vom Koordinatenursprung durch den Ortsvektor der zweiten verfahrbaren Stütze in Abhängigkeit des Winkels zwischen dem Geschwindigkeitsvektor der ersten verfahrbaren Stütze und dem Radius.

Vorzugsweise ist die Berieselungsanlage mit einer Kommunikationseinrichtung ausgebildet. Die Kommunikationseinrichtung ist ausgestaltet zum Signalaustausch oder Datenaustausch mit einer unabhängigen Steuereinrichtung oder einer unabhängigen Kommunikationseinrichtung. Weiter ist die Kommunikationseinrichtung ausgestaltet zum Signalaustausch oder Datenaustausch mit der vorgenannten Steuereinrichtung der Berieselungsanlage. Vorzugsweise ist die Kommunikationseinrichtung ausgestaltet zum funkbasierten bzw. drahtlosen Signalaustausch oder Datenaustausch.

Vorzugsweise ist die Berieselungsanlage ausgestaltet, aus einem ersten Zustand, in welchem die Geschwindigkeitsvektoren der beiden verfahrbaren Stützen zueinander im Wesentlichen parallel sind, umkehrbar in einen zweiten Zustand überführt zu werden, in welchem die Geschwindigkeitsvektoren der beiden verfahrbaren Stützen zueinander nicht parallel sind. Im ersten Zustand können sich die verfahrbare Stützen jeweils auf einer Kreisbahn bewegen wobei die Beträge der Geschwindigkeitsvektoren unterschiedlich sind. Wenn eines der Enden der Berieselungsanlage im ersten Zustand mit dem Zentralturm mechanisch und fluidleitend verbunden ist, dann können sich die verfahrbare Stützen im ersten Zustand auf Kreisbahnen um den Zentralturm bewegen, wobei das Fluid an eine kreisförmige Teilfläche der Verteilfläche abgegeben werden kann. Im zweiten Zustand können sich wenigstens zwei der verfahrbaren Stützen in unterschiedliche Richtungen bewegen. Im zweiten Zustand können die beiden Rohrleitungen zueinander umkehrbar abgewinkelt werden. Vorzugsweise gibt die Steuereinrichtung den beiden verfahrbaren Stützen im zweiten Zustand unterschiedliche Geschwindigkeitsvektoren vor, wobei sich Richtung, Betrag und/oder Orientierung der Geschwindigkeitsvektoren von erster verfahrbaren Stütze und zweiter verfahrbaren Stütze unterscheiden können. Vorzugsweise schneiden sich die Geschwindigkeitsvektoren der beiden verfahrbaren Stützen im zweiten Zustand. Vorzugsweise sind die Geschwindigkeitsvektoren der beiden verfahrbaren Stützen im zweiten Zustand windschief, wodurch vorteilhaft Höhenunterschiede innerhalb der Verteilfläche ausgeglichen werden können.

Bei einigen bekannten Berieselungsanlagen ist einer dieser Fahrtürme verdrehfest mit einem Ende einer dieser Rohrleitungen verbunden. Einige bekannte Fahrtürme weisen zwei Räder auf, welche hintereinander angeordnet sind und deren Rotationsachsen parallel zur Längsachse der zugehörigen Rohrleitung fixiert sind. Damit geht eine eingeschränkte Manövrierbarkeit des Fahrturms einher.

Die erfindungsgemäße verfahrbare Stütze weist zusätzliche Freiheitsgrade auf. In dem wenigstens eine der Bewegungseinrichtungen um die zweite Drehachse A₂ drehbar ist, können die verfahrbare Stützen gelenkt werden. Indem die Rohrhalterung um die erste Drehachse A₂ drehbar ist, kann die zugehörige Rohrleitung auch in eine Richtung verlagert werden, welche von der Senkrechten zur Längsachse der Rohrleitung abweicht. Damit geht eine verbesserte Manövrierbarkeit der verfahrbaren Stütze bzw. der Berieselungsanlage einher. Durch die verbesserte Manövrierbarkeit der verfahrbaren Stützen kann die zugehörige Rohrleitung bzw. Berieselungsanlage auch über Teilflächen einer landwirtschaftlichen Nutzfläche bzw. einer Verteilfläche bewegt werden, welche außerhalb eines kreisförmigen oder rechteckigen Abschnitts der landwirtschaftlichen Nutzfläche bzw. Verteilfläche liegen.

Bei einer bevorzugten Weiterbildung der Berieselungsanlage gemäß dem dritten Aspekt der Erfindung, welche vorteilhaft mit einer der vorgenannten Weiterbildungen kombinierbar ist, sind jeweils beide der Bewegungseinrichtungen um jeweils eine zweite Drehachse drehbar. Vorzugsweise sind die Achsträger der Bewegungseinrichtungen jeweils bezüglich der Stützeinrichtung drehbar. Vorzugsweise sind die Bewegungseinrichtungen wenigstens zeitweise um einen Winkel bezüglich der Stützeinrichtung um jeweils eine zweite Drehachse verdreht, wobei die Beträge dieser Winkel gleich und die Vorzeichen dieser Winkel aber entgegengesetzt sind. Vorzugsweise sind die Bewegungseinrichtungen bzw. deren Achsträger mit einer Koppelstange verbunden. Diese bevorzugte Weiterbildung bietet insbesondere den Vorteil, dass die Manövrierbarkeit der verfahrbaren Stützen verbessert ist. Diese bevorzugte Weiterbildung bietet insbesondere den Vorteil dass beide Bewegungseinrichtungen einer dieser verfahrbaren Stützen entlang derselben Kreisbahn abrollen können, wodurch insbesondere die Teilfläche der Verteilfläche, auf welcher die Bewegungseinrichtungen abrollen, verringert ist.

Die Berieselungsanlage gemäß dem dritten Aspekt kann besser an veränderliche Breiten des Streifens, entlang welchem das Fluid an die Verteilfläche abzugeben ist, angepasst werden, insbesondere indem die Längsachse der äußeren Rohrleitung mit unterschiedlichen Winkeln zwischen 0° und 90° zu dem Geschwindigkeitsvektor der verfahrbaren Stützen angestellt werden kann. Mit spitzeren Winkeln bzgl. der ersten verfahrbaren Stütze ist die Breite des Streifens verringerbar. Diese Berieselungsanlage bietet insbesondere den Vorteil, dass ein Hindernis umfahren werden kann. Diese Berieselungsanlage bietet insbesondere den Vorteil, dass der Radius der Bahn der äußeren verfahrbaren Stütze verringert werden kann, insbesondere zum Ausweichen bzw. Umfahren eines Hindernisses.

Eine weitere bevorzugte Weiterbildung der Berieselungsanlage gemäß dem dritten Aspekt der Erfindung, welche vorteilhaft mit einer der vorgenannten Weiterbildungen kombinierbar ist, weist eine dritte dieser verfahrbaren Stützen und eine dritte dieser Rohrleitungen auf. Ein erstes Ende der dritten Rohrleitung ist mit der zweiten verfahrbaren Stütze und ein zweites Ende der dritten Rohrleitung ist mit der dritten verfahrbaren Stütze verbindbar.

Vorzugsweise ist die Berieselungsanlage ausgestaltet, aus einem ersten Zustand, in welchem die Geschwindigkeitsvektoren der verfahrbaren Stützen zueinander im Wesentlichen parallel sind, umkehrbar in einen zweiten Zustand überführt zu werden, in welchem die Geschwindigkeitsvektoren von wenigstens zwei der verfahrbaren Stützen zueinander nicht parallel sind. Im ersten Zustand können sich die verfahrbare Stützen jeweils auf einer Kreisbahn bewegen wobei die Beträge der Geschwindigkeitsvektoren unterschiedlich sind. Wenn eines der Enden der Berieselungsanlage im ersten Zustand mit dem Zentralturm mechanisch und fluidleitend verbunden ist, dann können sich die verfahrbare Stützen im ersten Zustand auf Kreisbahnen um den Zentralturm bewegen, wobei das Fluid an eine kreisförmige Teilfläche der Verteilfläche abgegeben werden kann. Im zweiten Zustand können sich wenigstens zwei der verfahrbaren Stützen in unterschiedliche Richtungen bewegen. Im zweiten Zustand können die beiden Rohrleitungen zueinander umkehrbar abgewinkelt werden. Vorzugsweise gibt die Steuereinrichtung den beiden verfahrbaren Stützen im zweiten Zustand unterschiedliche Geschwindigkeitsvektoren vor, wobei sich Richtung, Betrag und/oder Orientierung der Geschwindigkeitsvektoren von erster verfahrbaren Stütze und zweiter verfahrbaren Stütze unterscheiden können. Vorzugsweise schneiden sich die Geschwindigkeitsvektoren der beiden verfahrbaren Stützen im zweiten Zustand. Vorzugsweise sind die Geschwindigkeitsvektoren der beiden verfahrbaren Stützen im zweiten Zustand windschief, wodurch vorteilhaft Höhenunterschiede innerhalb der Verteilfläche ausgeglichen werden können.

Diese bevorzugte Weiterbildung bietet insbesondere den Vorteil, dass das Fluid entlang eines breiteren Streifens an die Verteilfläche abgegeben werden kann. Diese bevorzugte Weiterbildung bietet insbesondere den Vorteil, dass die Berieselungsanlage besser an veränderliche Breiten des Streifens, entlang welchem das Fluid an die Verteilfläche abzugeben ist, angepasst werden kann, insbesondere mittels der zeitlichen Verhinderung von Winkeln zwischen den einzelnen Rohrleitungen. Diese bevorzugte Weiterbildung bietet insbesondere den Vorteil, dass die Berieselungsanlage besser an veränderliche Breiten des Streifens, entlang welchem das Fluid an die Verteilfläche abzugeben ist, angepasst werden kann, insbesondere indem die Längsachse wenigstens einer der Rohrleitungen mit unterschiedlichen Winkeln zwischen 0° und 90° zu den Geschwindigkeitsvektoren der verfahrbaren Stützen angestellt werden kann. Mit spitzeren Winkeln ist die Breite des Streifens verringerbar. Diese bevorzugte Weiterbildung bietet insbesondere den Vorteil, dass das Verhältnis aus geringster Breite und größter Breite des Streifens kleiner ist. Diese bevorzugte Weiterbildung bietet insbesondere den Vorteil, dass ein Hindernis umfahren werden kann. Diese bevorzugte Weiterbildung bietet insbesondere den Vorteil, dass der Radius der Bahn einer der verfahrbaren Stützen verringert werden kann, insbesondere zum Ausweichen bzw. Umfahren eines Hindernisses. Diese bevorzugte Weiterbildung bietet insbesondere den Vorteil, dass der Abstand zwischen zwei dieser verfahrbaren Stützen verringert werden kann, insbesondere zum Ausweichen bzw. Umfahren eines Hindernisses.

Gemäß einer bevorzugten Weiterbildung der Berieselungsanlage sind die verfahrbare Stützen mit kürzeren Rohrleitungen kombinierbar und/oder mit zusätzlichen verfahrbaren Stützen und Rohrleitungen ausgestaltet. Diese bevorzugte Weiterbildung bietet insbesondere den Vorteil, dass die Berieselungsanlage einfacher an größte und kleinste Abmessungen der Verteilfläche angepasst werden kann, insbesondere zum vereinfachten Umfahren von Hindernissen.

### Verfahren

Gemäß einem vierten Aspekt der Erfindung ist eine der vorgenannten Berieselungsanlagen, welche eine dieser Steuereinrichtungen aufweist, und wobei in der Verteilfläche, an welche das Fluid abzugeben ist, ein Koordinatensprung definiert ist, mit einem Verfahren betreibbar, welches wenigstens einen der nachfolgenden Schritte aufweist:
- S1: Vorgeben eines Geschwindigkeitsvektors für eine der verfahrbaren Stützen abhängig von einem ersten Ortsvektor der verfahrbaren Stütze, wobei der erste Ortsvektor auf die Position der verfahrbaren Stütze bzgl. des Koordinatenursprungs, vorzugsweise zu einem ersten Zeitpunkt, hinweist, und/oder
- S2: Vorgeben des Geschwindigkeitsvektors für eine der verfahrbaren Stützen an einer ersten Position, welche durch den ersten Ortsvektor beschreibbar ist, abhängig von dem ersten Ortsvektor und einem zweiten Ortsvektor, wobei der zweite Ortsvektor auf die Position der verfahrbaren Stütze bzgl. eines Koordinatenursprungs zu einem späteren Zeitpunkt als dem ersten Zeitpunkt hinweist, und/oder
- S3: Vorgeben einer Abrollgeschwindigkeit, mit welcher eine dieser Bewegungseinrichtungen insbesondere um die dritte Drehachse, abrollen soll, und/oder eines Lenkwinkels der Bewegungseinrichtung, abhängig vom Geschwindigkeitsvektor für die verfahrbare Stütze, insbesondere nach Schritt S1 oder S2, wobei der Lenkwinkel zwischen der dritten Drehachse der Bewegungseinrichtung und der Hauptebene zu messen ist, und/oder
- S4: Verringern des Betrags des Geschwindigkeitsvektors einer ersten dieser verfahrbaren Stützen, wenn der Betrag des Geschwindigkeitsvektors einer zweiten dieser verfahrbaren Stützen einen Grenzbetrag überschreitet, wobei vorzugsweise die zweite verfahrbare Stütze vom Koordinatenursprung weiter entfernt ist, als die erste verfahrbare Stütze, insbesondere nach Schritt S1 oder S2, und/oder
- S6: Vorgeben eines Winkels zwischen dem Geschwindigkeitsvektor der zweiten verfahrbaren Stütze und einem Radius ausgehend vom Koordinatenursprung durch den Ortsvektor der zweiten verfahrbaren Stütze in Abhängigkeit des Winkels zwischen dem Geschwindigkeitsvektor der ersten verfahrbaren Stütze und dem Radius, insbesondere nach Schritt S1 oder S2.

Vorzugsweise ist die zu betreibende Berieselungsanlage gemäß dem dritten Aspekt, dem vierten Aspekt der Erfindung oder gemäß einer der bevorzugten Weiterbildungen ausgebildet.

Mit Schritt S1 kann der weitere Weg dieser verfahrbaren Stütze der Berieselungsanlage vorgegeben werden. Mit der Vorgabe unterschiedlicher Geschwindigkeitsvektoren für zwei der verfahrbaren Stützen können für eine dieser Rohrleitung, welche durch die beiden verfahrbaren Stützen abgestützt ist, eine Translation und/oder eine Rotation vorgegeben werden. Mit der Vorgabe unterschiedlicher Geschwindigkeitsvektoren für wenigstens zwei oder drei dieser verfahrbaren Stützen können für durch diese verfahrbaren Stützen abgestützte Rohrleitungen verschiedene Translationen und/oder eine Rotationen vorgegeben werden und vorzugsweise der Winkel α, dessen Winkelebene im Wesentlichen senkrecht zu der ersten Drehachse angeordnet ist, zwischen diesen beiden Rohrleitungen verändert werden, vorzugsweise zur Abgabe des zu verteilenden Fluids an eine unregelmäßig geformte Verteilfläche, besonders bevorzugt an eine nicht kreisförmige oder nicht viereckige Verteilfläche. Mit Schritt S1 ist die Berieselungsanlage für Schritt S3 vorbereitet.

Mit Schritt S2 kann der weitere Weg dieser verfahrbaren Stütze der Berieselungsanlage vorgegeben werden. Mit Schritt S2 kann die Steuereinrichtung die gewünschte Bewegung wenigstens einer oder mehrerer dieser verfahrbaren Stützen bzw. der Berieselungsanlage auf Grundlage von Stützpunkten, welche auf gewünschte Positionen der wenigstens einen verfahrbaren Stütze hinweisen, welche der Steuereinrichtung zur Verfügung gestellt werden, vorgeben. Mit der Vorgabe unterschiedlicher Geschwindigkeitsvektoren für zwei der verfahrbaren Stützen können für eine dieser Rohrleitung, welche durch die beiden verfahrbaren Stützen abgestützt ist, eine Translation und/oder eine Rotation vorgegeben werden. Mit der Vorgabe unterschiedlicher Geschwindigkeitsvektoren für wenigstens zwei oder drei dieser verfahrbaren Stützen können für durch diese verfahrbare Stützen abgestützte Rohrleitungen verschiedene Translationen und/oder eine Rotationen vorgegeben werden und vorzugsweise der Winkel α, dessen Winkelebene im Wesentlichen senkrecht zu der ersten Drehachse angeordnet ist, zwischen den Längsachsen dieser beiden Rohrleitungen verändert werden, vorzugsweise zur Abgabe des zu verteilenden Fluids an eine unregelmäßig geformte Verteilfläche, besonders bevorzugt an eine nicht kreisförmige oder nicht viereckige Verteilfläche. Mit Schritt S2 ist die Berieselungsanlage für Schritt S3 vorbereitet.

Mit Schritt S3, wobei vorzugsweise eines der Ergebnisse aus Schritt S1 oder Schritt S2 wird, kann die Steuereinrichtung, vorzugsweise unter Berücksichtigung von für die Bewegungseinrichtungen spezifischen Daten wie Abrollänge pro Umdrehung, Motorleistung, maximal zulässige Drehzahl, zulässige Lenkwinkel, zulässige Biegemomente insbesondere betreffend die Rohrleitungen einen vorgegebenen Geschwindigkeitsvektor an die Besonderheiten der Berieselungsanlage anpassen. Mit Schritt S3 kann der Lenkwinkel einer dieser Bewegungseinrichtungen an den Lenkwinkel einer zweiten dieser Bewegungseinrichtungen derselben verfahrbaren Stütze derart angepasst werden, dass beide Bewegungseinrichtungen auf derselben Fahrlinie bzw. Bogenlinie, auf parallelen Fahrlinien oder auf divergierenden Fahrlinien abrollen können. Vorzugsweise ist die Steuereinrichtung zur Erarbeitung einer Näherungslösung und/oder einer Ersatzlösung für eine oder mehrere der Bewegungseinrichtungen ausgestaltet, wenn ein gewünschter Geschwindigkeitsvektor nicht umgesetzt werden kann. Das Ergebnis aus Schritt S3 kann eine lineare Geschwindigkeit oder eine Winkelgeschwindigkeit bzw. Drehzahl sein.

Mit Schritt S4 kann die Steuereinrichtung auf für die Bewegungseinrichtungen spezifischen Daten wie maximale Fahrgeschwindigkeit, maximal zulässige Beschleunigung usw. Rücksicht nehmen. Mit Schritt S4 kann erreicht werden, das eine äußeren dieser verfahrbaren Stützen bei einer gekrümmten Fahrt oder Kreisfahrt der Berieselungsanlage mit einer, bzgl. des Koordinatenursprungs näheren, inneren verfahrbaren Stütze Schritt halten kann, indem der Geschwindigkeitsvektor bzw. die vorgegebene Abrollgeschwindigkeit der inneren verfahrbaren Stütze verringert wird. Vorzugsweise erfolgt Schritt S4 nach einem der Schritte S1 oder S2. Vorzugsweise erfolgt Schritt S4 vor Schritt S3.

Mit Schritt S6 kann der Winkel α, dessen Winkelebene im Wesentlichen senkrecht zu der ersten Drehachse angeordnet ist, zwischen den Längsachsen dieser beiden Rohrleitungen verändert werden, vorzugsweise zur Abgabe des zu verteilenden Fluids an eine unregelmäßig geformte Verteilfläche, besonders bevorzugt an eine nicht kreisförmige Verteilfläche, besonders bevorzugt zur Abgabe des zu verteilenden Fluids an eine zweite Teilfläche der Verteilfläche außerhalb einer im Wesentlichen kreisförmigen ersten Teilfläche derselben Verteilfläche. Vorzugsweise erfolgt Schritt S6 vor Schritt S3.

Vorzugsweise kann die Berieselungsanlage mit den Schritten S1, S2, S3, S4 und S6 betrieben werden.

Bei einigen bekannten Berieselungsanlagen ist einer dieser Fahrtürme verdrehfest mit einem Ende einer dieser Rohrleitungen verbunden. Einige bekannte Fahrtürme weisen zwei Räder auf, welche hintereinander angeordnet sind und deren Rotationsachsen parallel zur Längsachse der zugehörigen Rohrleitung fixiert sind. Damit geht eine eingeschränkte Manövrierbarkeit des Fahrturms einher.

Die mit den Schritten S1, S2, S3, S4 und/oder S6 betriebene Berieselungsanlage weist zusätzliche Freiheitsgrade auf. In dem wenigstens eine der Bewegungseinrichtungen um die zweite Drehachse A₂ drehbar ist, kann die verfahrbare Stütze gelenkt werden. Indem die Rohrhalterung um die erste Drehachse A₂ drehbar ist, kann die zugehörige Rohrleitung auch in eine Richtung verlagert werden, welche von der Senkrechten zur Längsachse der Rohrleitung abweicht. Damit geht eine verbesserte Manövrierbarkeit der verfahrbaren Stütze einher. Durch die verbesserte Manövrierbarkeit der verfahrbaren Stütze kann die zugehörige Rohrleitung auch über Teilflächen einer landwirtschaftlichen Nutzfläche bzw. einer Verteilfläche bewegt werden, welche außerhalb eines kreisförmigen oder rechteckigen Abschnitts der landwirtschaftlichen Nutzfläche bzw. Verteilfläche liegen.

Eine bevorzugte Weiterbildung des Verfahrens gemäß dem vierten Aspekt der Erfindung, zusätzlich den folgenden Schritt auf:
- S5: Vergrößern eines Fluidstroms durch eine dieser Rohrleitungen, vorzugsweise proportional, mit größerem Betrag des Geschwindigkeitsvektors einer dieser verfahrbaren Stützen, insbesondere umkehrbar, insbesondere nach Schritt S1 oder S2.

Mit Schritt S5 kann eine höhere Geschwindigkeit wenigstens einer dieser verfahrbaren Stützen für ausreichende Verteilung des Fluids auf einer Teilfläche der Verteilfläche berücksichtigt werden. Mit Schritt S5 kann eine geringere Geschwindigkeit wenigstens einer dieser verfahrbaren Stützen gegen übermäßige Abgabe des Fluid an eine Teilfläche der Verteilfläche berücksichtigt werden. Vorzugsweise erfolgt Schritt S5 nach einem der Schritte S1 oder S2. Vorzugsweise ist die Steuereinrichtung mit wenigstens einem oder mehrere dieser Fluidauslässe bzw. dem zugehörigen Ventil elektrisch verbindbar.

Vorzugsweise ist deren Steuereinrichtung zur Durchführung der Schritte S1 bis S6 ausgestaltet.

Diese bevorzugte Weiterbildung bietet insbesondere der Vorteil, dass die Verteilung des Fluids, d.h. der Volumenstrom des Fluids, an die verschiedenen Betriebszustände, Winkel α, Geschwindigkeitsvektoren, Geometrie der Verteilfläche angepasst werden.

Gemäß einer bevorzugten Weiterbildung ist die Berieselungsanlage gemäß dem zweiten oder dritten Aspekt umkehrbar überführbar aus einem Zustand, in welchem die Rohrleitungen bzw. deren Längsachsen im Wesentlichen geradlinig angeordnet sind zum Überdecken eines möglichst breiten Streifens der Verteilfläche, in einen Zustand, in welchem wenigstens zwei der Rohrleitungen bzw. deren Längsachsen miteinander einen Winkel 60° > α > 30° bilden zum Überdecken eines möglichst schmalen Streifens der Verteilfläche. Vorzugsweise wird dabei umkehrbar wenigstens eine dieser Gelenkeinrichtungen wenigstens teilweise abgewinkelt. Diese bevorzugte Weiterbildung bietet insbesondere den Vorteil, dass die Geometrie der Verteilfläche für die Verteilung des Fluids verbessert berücksichtigt werden kann.

Gemäß einem fünften Aspekt der Erfindung kann eine vorhandene Berieselungsanlage, aufweisend wenigstens eine Rohrleitung und wenigstens einen Fahrturm zum Abstützen und Bewegen einer dieser Rohrleitungen, mit wenigstens einer dieser verfahrbaren Stützen nachgerüstet werden, mit wenigstens einem der folgenden Schritte:
- S7: Trennen einer dieser Rohrleitungen von einem dieser Fahrtürme,
- S8: Bereitstellen einer dieser verfahrbaren Stützen, deren Rohrhalterung, insbesondere deren Rohrverbindungsabschnitte, zur Verbindung mit wenigstens einer dieser Rohrleitungen ausgestaltet sind,
- S9: Verbinden, insbesondere fluidleitend, wenigstens einer dieser Rohrleitungen mit der Rohrhalterung, insbesondere mit einem dieser Rohrverbindungsabschnitte.

Mit Schritt S7 kann einer der Rohrleitungen der vorhandenen Berieselungsanlage von einem dieser Fahrtürme getrennt und für die nachfolgenden Schritte, insbesondere für Schritt S9, vorbereitet werden.

Mit Schritt S9 kann ein Flansch der Rohleitung mit einem entsprechend ausgestalteten Gegenstück bzw. der Rohrhalterung bzw. des Rohrverbindungsabschnitts mechanisch und/oder fluidleitend verbunden werden. Vorzugsweise sind für Schritt S9 die Rohrhalterung bzw. deren Rohrverbindungsabschnitte auswechselbare Flanschen zur Anpassung an verschiedene Rohrleitungen ausgestattet. Im Anschluss an Schritt S9 kann die Rohrleitung mit der verfahrbaren Stütze abgestützt und bezüglich der Verteilfläche bewegt werden.

Vorzugsweise werden die Schritte S7 bis S9 mehrfach durchgeführt.

Das Verfahren gemäß dem fünften Aspekt der Erfindung bietet insbesondere den Vorteil, dass die Rohrleitungen einer vorhandenen Berieselungsanlage wiederverwendet werden können, um Kosten, Transportkosten und/oder Energie zu sparen. Das Verfahren gemäß dem fünften Aspekt der Erfindung bietet insbesondere den Vorteil, dass die Rohrleitungen einer vorhandenen Berieselungsanlage verbessert manövriert werden können.

Eine bevorzugte Weiterbildung des Verfahrens gemäß dem fünften Aspekt der Erfindung weist den folgenden Schritt auf:
- S10: Verbinden einer dieser Steuereinrichtungen mit der wenigstens einen verfahrbaren Stütze und/oder mit der wenigstens einen Rohrleitung.

Dabei kann die vorhandene Berieselungsanlage mit einer dieser Steuereinrichtungen nachgerüstet werden. Die Steuereinrichtung, ausgestaltet zur Durchführung der Schritte S1 bis S6, ermöglicht in Verbindung mit einer dieser verfahrbaren Stützen eine verbesserte Manövrierbarkeit der vorhandenen Berieselungsanlage.

Diese bevorzugte Weiterbildung bietet insbesondere den Vorteil, dass die Rohrleitungen einer vorhandenen Berieselungsanlage verbessert manövriert werden können.

### Verwendung einer dieser verfahrbaren Stützen

Gemäß einem sechsten Aspekt der Erfindung wird eine dieser verfahrbaren Stützen mit einer vorhandenen Berieselungsanlage verwendet, vorzugsweise zum Nachrüsten der vorhandenen Berieselungsanlage. Vorzugsweise ist die wenigstens eine verfahrbare Stütze gemäß einer der bevorzugten Weiterbildung ausgebildet. Damit geht insbesondere der Vorteil einher, dass die Rohrleitungen einer vorhandenen Berieselungsanlage verbessert manövriert werden können. Damit geht insbesondere der Vorteil einher, dass die Verteilung des Fluids entlang der Verteilfläche verbessert ist.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: schematisch eine verfahrbare Stütze,
- Fig. 2: schematisch eine bevorzugte Weiterbildung der verfahrbaren Stütze,
- Fig. 3: schematisch und perspektivisch die verfahrbare Stütze gemäß Fig. 2,
- Fig. 4: schematisch und perspektivisch eine andere Ansicht der verfahrbaren Stütze gemäß Fig. 2,
- Fig. 5: schematisch und perspektivisch eine andere Ansicht der verfahrbaren Stütze gemäß Fig. 2,
- Fig. 6: schematisch eine Berieselungsanlage mit einer dieser verfahrbaren Stützen zu verschiedenen Zeitpunkten auf einer Verteilfläche,
- Fig. 7: schematisch eine weitere Berieselungsanlage mit einer dieser verfahrbaren Stützen zu verschiedenen Zeitpunkten auf einer Verteilfläche,
- Fig. 8: schematisch eine weitere Berieselungsanlage mit einer dieser verfahrbaren Stützen auf einer Verteilfläche mit einem Hindernis,
- Fig. 9: schematisch zwei Ansichten der Berieselungsanlage gemäß Figur 8 beim Umfahren eines Hindernisses,
- Fig. 10: schematisch eine weitere Ansicht der Berieselungsanlage gemäß Figur 8,
- Fig. 11: schematisch eine weitere Ansicht der Berieselungsanlage gemäß Figur 8, beim Umfahren eines Hindernisses,
- Fig. 12: schematisch und perspektivisch eine Berieselungsanlage mit mehreren verfahrbaren Stützen gemäß einer der Figuren 2-5,
- Fig. 13: schematisch und perspektivisch eine verfahrbare Stütze der Fig. 12,
- Fig. 14: schematisch und perspektivisch die Berieselungsanlage gemäß Fig. 12 mit abgewinkelten Rohrleitungen.

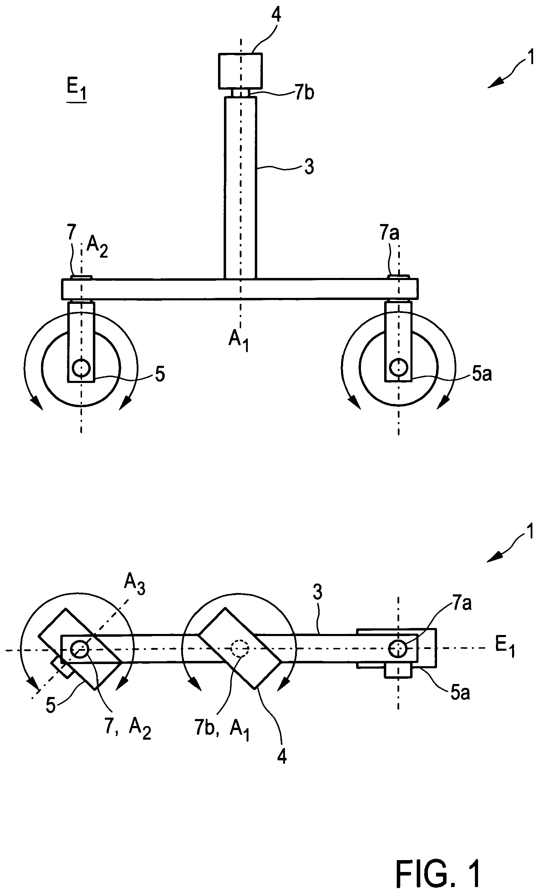

Fig.1 zeigt schematisch eine verfahrbare Stütze 1. Die verfahrbare Stütze ist mit einer Stützeinrichtung 3 ausgebildet, welche vorzugsweise drei Verbindungselemente 7, 7a, 7b aufweist. Die verfahrbare Stütze ist mit einer Rohrhalterung ausgebildet, welche zur lösbaren Verbindung mit wenigstens einer dieser Rohrleitungen ausgestaltet ist, welche um eine erste Drehachse A₁ drehbar ist, welche vorzugsweise dem dritten Verbindungselement 7b, der Stützeinrichtung verbunden ist. Die verfahrbare Stütze ist mit zwei Bewegungseinrichtungen 5, 5a ausgebildet, welche jeweils mit, vorzugsweise dem ersten Verbindungselement 7 oder dem zweiten Verbindungselement 7a, der Stützeinrichtung 3 verbunden sind, welche vorzugsweise zum Abrollen um je eine dritte Drehachse A₃ ausgestaltet sind, wobei wenigstens eine dieser Bewegungseinrichtungen um eine zweite Drehachse A₂ drehbar mit der Stützeinrichtung verbunden ist, wobei die zweite Drehachse A₂ im Wesentlichen parallel zu der ersten Drehachse A₁ angeordnet ist.

Vorzugsweise ist die Stützeinrichtung mit zwei metallischen Profilstäben ausgebildet. Der erste Profilstab hält die drei Verbindungselemente. Vorzugsweise sind die Bewegungseinrichtungen mit Rädern und Achsträgern ausgebildet. Vorzugsweise sind das erste und dritte Verbindungselement als Drehlagerungen ausgebildet. Vorzugsweise sind die drei Verbindungselemente in einer Hauptebene angeordnet. Vorzugsweise sind die erste Drehachse und die zweite Drehachse parallel zu der Hauptebene angeordnet.

Die Figur 1 zeigt oben eine Seitenansicht und unten eine Draufsicht auf die verfahrbare Stütze.

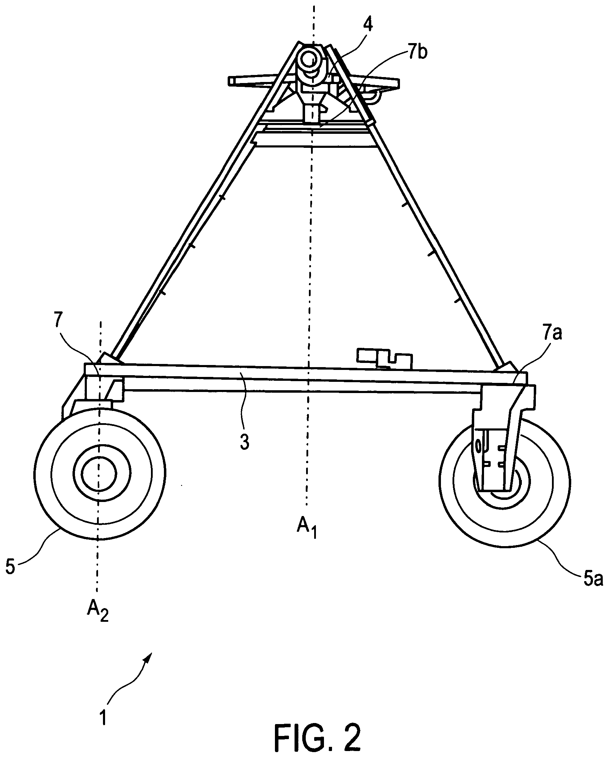

Fig. 2 zeigt schematisch eine bevorzugte Weiterbildung der verfahrbaren Stütze.

Gegenüber der verfahrbaren Stütze gemäß der Figur 1 bzw. deren Stützeinrichtung 3 sind beide Bewegungseinrichtungen 5, 5a lenkbar. Die Achsträger 10, 10a der Bewegungseinrichtungen sind mit einer Koppelstange 12 verbunden. Eine erste Stelleinrichtung 13 ist mit einem Elektromotor ausgebildet und ausgestaltet, die Bewegungseinrichtungen über die Koppelstange und die Achsträger zu lenken. Die Koppelstange 12 ist mit einer Kulissenführung und/oder einer Zahnstange zur Wechselwirkung mit der ersten Stelleinrichtung 13 ausgebildet. Die Bewegungseinrichtungen weisen jeweils eine Antriebseinrichtung auf, welche mit einem Elektromotor ausgebildet sind. Die Achsträger sind mit der Koppelstange verbunden zur proportionalen Lenkung mit entgegengesetzten Lenkwinkeln.

Das dritte Verbindungselement 7c ist mit einem Drehkranz ausgebildet und zwischen die Rohrhalterung 4 und die Stützeinrichtung 3 eingefügt. Der Drehkranz ist mit der Rohrhalterung und der Stützeinrichtung verbunden. Der Drehkranz ist auf einer Montageplatte der Stützeinrichtung 3 montiert.

Die Rohrhalterung 4 weist ein Gelenkstützelement 9 und zwei Gelenkeinrichtungen 8, 8a auf. Das Gelenkstützelement ist mit dem Drehkranz verbunden. Eine erste der Gelenkeinrichtungen 8, welche zum Abwinkeln in der Winkelebene E₂ dient, weist ein Anschlagelement 14 auf. Das Anschlagelement ist mit zwei Zugstangen ausgebildet, welche mit dem Gelenkstützelement verbunden sind. Die erste Gelenkeinrichtung 8 ist zum Abwinkeln um die vierte Drehachse ausgebildet. Die vierte Drehachse ist im Wesentlichen parallel zu der ersten Drehachse angeordnet. Die zweite Gelenkeinrichtung 8a ist zum Abwinkeln um die fünfte Drehachse ausgebildet. Die fünfte Drehachse ist im Wesentlichen senkrecht zu der ersten bzw. vierten Drehachse angeordnet.

Die Rohrhalterung 4 weist zwei im Wesentlichen rohrförmige Rohrverbindungsabschnitte 15, 15a auf. Die Rohrverbindungsabschnitte dienen der mechanischen und fluidleitenden Verbindung jeweils mit einer Rohrleitung. Die Rohrverbindungsabschnitte sind mit den Gelenkeinrichtungen verbunden. Die Rohrverbindungsabschnitte weisen jeweils einen Flansch zur Verbindung mit je einer Rohrleitung auf.

Die Stützeinrichtung mit ist einem Fachwerk, vorzugsweise mit Metallstäben, ausgebildet zur verbesserten Aufnahme von Kräften aus dem Betrieb der verfahrbaren Stütze. Einige Metallstäbe sind entsprechend Sprossen einer Leiter ausgebildet für vereinfachte Montage der Rohrleitungen und/oder für vereinfachte Wartung des Drehkranzes und der Gelenkeinrichtungen.

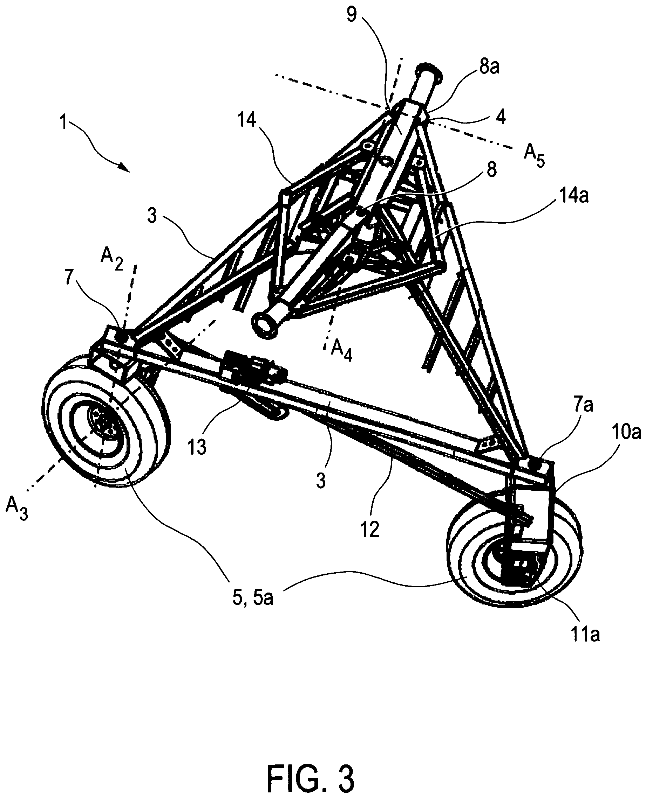

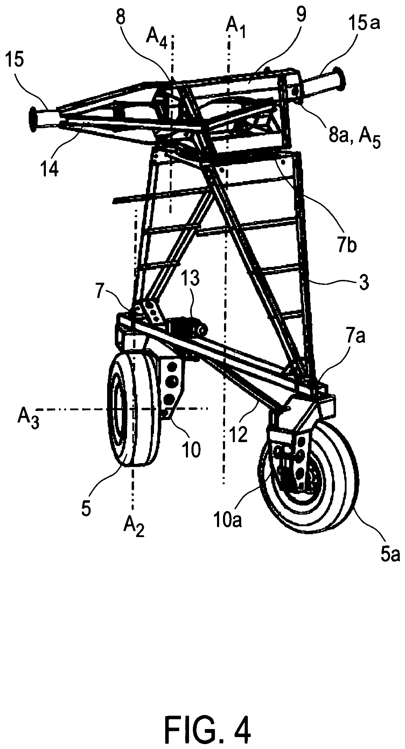

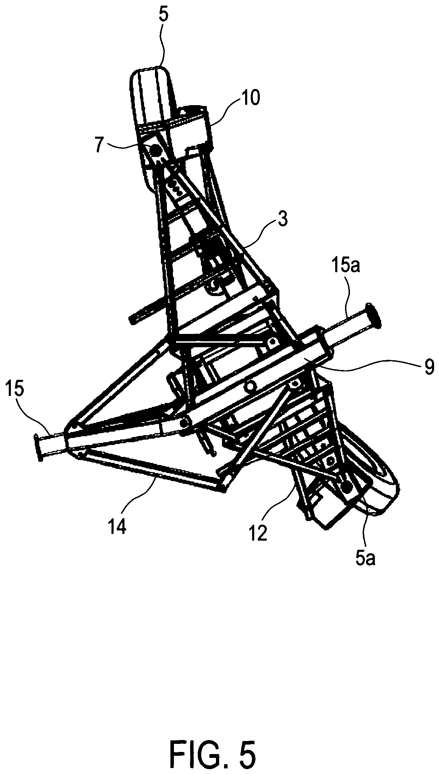

Fig. 3, Fig. 4 und Fig. 5 zeigen schematisch und perspektivisch andere Ansichten der verfahrbaren Stütze gemäß Fig. 2.

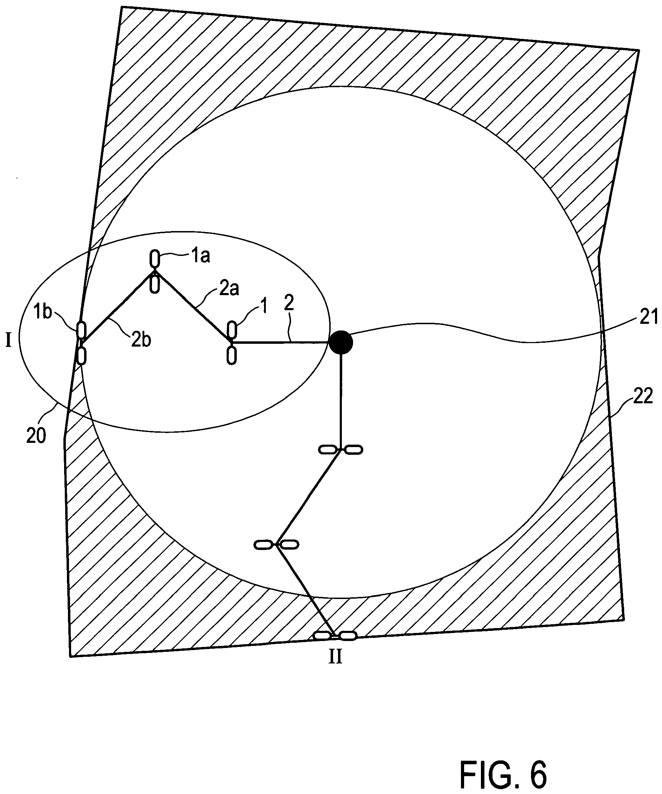

Fig. 6 zeigt schematisch eine Berieselungsanlage 20 mit drei dieser verfahrbaren Stützen 1, 1a, 1 b bei verschiedenen Zuständen bzw. zu verschiedenen Zeitpunkten **I** und **II** auf einer Verteilfläche 22. Die verfahrbare Stützen stützen drei dieser Rohrleitungen 2, 2a, 2b. Die Rohrleitung 2 ist mit einem unabhängigen Zentralturm 21 verbunden. Die Berieselungsanlage bzw. die innere Rohrleitung 2 werden aus dem Zentralturm mit dem zu verteilenden Fluid, hier beispielhaft Wasser, versorgt. Die Rohrleitungen weisen jeweils einige Fluidauslässe entlang der jeweiligen Längsachse auf.

Die Verteilfläche 22 ist mehreckig und weist eine kreisförmige Teilfläche auf. Mit der Berieselungsanlage sind auch Teilflächen der Verteilfläche mit dem Fluid versorgbar, welche außerhalb der kreisförmigen Teilfläche liegen.

Zum Zeitpunkt I bilden die Rohrleitungen 2b und 2a bzw. deren Längsachsen einen Winkel α < 95°, damit die äußere verfahrbare Stütze 1 b nicht über den linken Rand der Verteilfläche 22 hinaus fährt.

Zum Zeitpunkt II bilden die Rohrleitungen 2b und 2a bzw. deren Längsachsen einen Winkel α > 110°, damit die äußere verfahrbare Stütze 1 b bis an den unteren Rand der Verteilfläche 22 fahren kann.

Es ist nicht dargestellt, dass dieser Winkel α zeitweise, insbesondere wenn die äußere verfahrbare Stütze entlang des Rands der Verteilfläche nahe einer Ecke fahren soll, bis 180° betragen kann.

Für das Befahren der verschiedenen Fahrlinien gibt die Steuereinrichtungen den verfahrbaren Stützen 1a, 1 b geeignete Geschwindigkeitsvektoren, Abrollgeschwindigkeiten und Lenkwinkel vor. Vorzugsweise kann die Steuereinrichtung, insbesondere bei Fahrt entlang einer bogenförmigen Fahrlinie, der Betrag des Geschwindigkeitsvektors der äußeren verfahrbaren Stütze 1 c größer vorgegeben sein, als der Betrag des Geschwindigkeitsvektors der mittleren verfahrbaren Stütze 1 b.

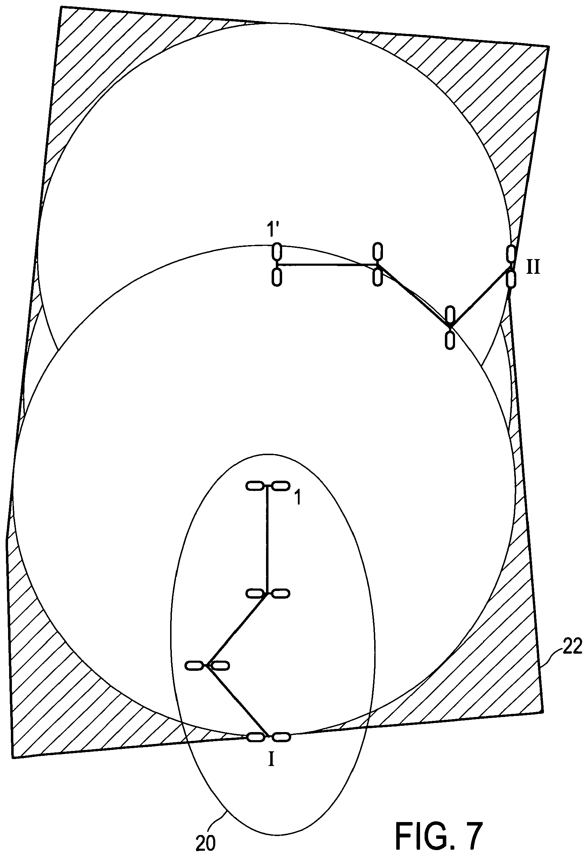

Fig. 7 zeigt schematisch eine weitere Berieselungsanlage 20 mit drei dieser verfahrbaren Stützen 1, 1a, 1b bei verschiedenen Zuständen bzw. zu verschiedenen Zeitpunkten I und II auf einer Verteilfläche 22. Die verfahrbare Stützen stützen drei dieser Rohrleitungen 2, 2a, 2b.

Mit einer gestrichelten Linie ist eine unabhängige Fluidversorgungsleitung dargestellt, aus welche die Rohrleitung 2 versorgt wird. Die Rohrleitungen weisen jeweils einige Fluidauslässe entlang der jeweiligen Längsachse auf.

Die Verteilfläche 22 ist mehreckig. Innerhalb der Grenzen der Verteilfläche können mehrere kreisförmige Teilfläche angeordnet werden. Mit der Berieselungsanlage sind auch Teilflächen der Verteilfläche mit dem Fluid versorgbar, welche außerhalb einer dieser kreisförmigen Teilflächen liegen.

Zu den Zeitpunkten I und II bilden die Rohrleitungen 2b und 2a bzw. deren Längsachsen einen Winkel α < 95°, damit die äußere verfahrbare Stütze 1 b nicht über den unteren bzw. linken Rand der Verteilfläche 22 hinaus fahren.

Es ist nicht dargestellt, dass dieser Winkel α zeitweise, insbesondere wenn die äußere verfahrbare Stütze entlang des Rands der Verteilfläche nahe einer Ecke fahren soll, bis 180° betragen kann.

Für das Befahren der verschiedenen Fahrlinien gibt die Steuereinrichtungen den verfahrbaren Stützen 1, 1a, 1b geeignete Geschwindigkeitsvektoren, Abrollgeschwindigkeiten und Lenkwinkel vor. Vorzugsweise kann die Steuereinrichtung, insbesondere bei Fahrt entlang einer bogenförmigen Fahrlinie, der Betrag des Geschwindigkeitsvektors der äußeren verfahrbaren Stütze 1 c größer vorgegeben sein, als der Betrag des Geschwindigkeitsvektors der mittleren verfahrbaren Stütze 1 b.

Zur im Wesentlichen bogenförmigen Fahrt zu Zeitpunkt I sind die Bewegungseinrichtungen der inneren verfahrbaren Stütze 1 jeweils um 90° gegenüber der Hauptebene der Stützeinrichtung abgewinkelt. Dabei kann die innere verfahrbare Stütze auf der Stelle um die erste Drehachse rotieren.

Anschließend wird der inneren verfahrbaren Stütze 1 ein Geschwindigkeitsvektor zur Fahrt entlang der unabhängigen Fluidversorgungsleitung vorgegeben, somit zur Translation.

Zum Zeitpunkt II wird die innere verfahrbare Stütze 1 wieder zur Rotation angesteuert.

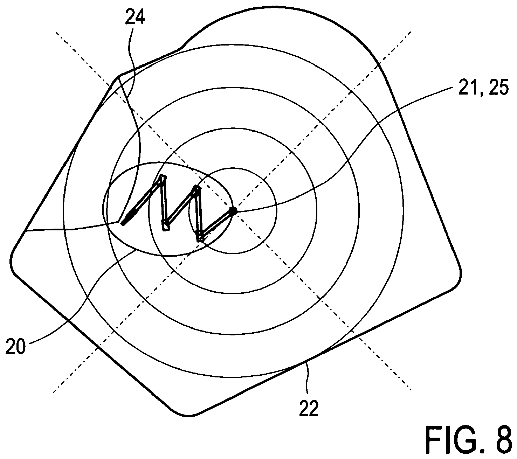

Fig. 8 zeigt schematisch eine weitere Berieselungsanlage 20 mit fünf dieser verfahrbaren Stützen und fünf Rohrleitungen auf einer Verteilfläche 22 mit einem Hindernis 24, beispielsweise einer Baumgruppe oder einer Grube. In die Verteilfläche 22 ist ein Polarkoordinatensystem gelegt. Der Koordinatenursprung 25 ist in den Zentralturm 21 gelegt. Das Hindernis erstreckt sich etwa zwischen 135° und 180°. Innerhalb dieses Winkelbereichs sind die Rohrleitungen der Berieselungsanlage zueinander angewinkelt, damit die äußere verfahrbare Stütze das Hindernis umfahren kann.

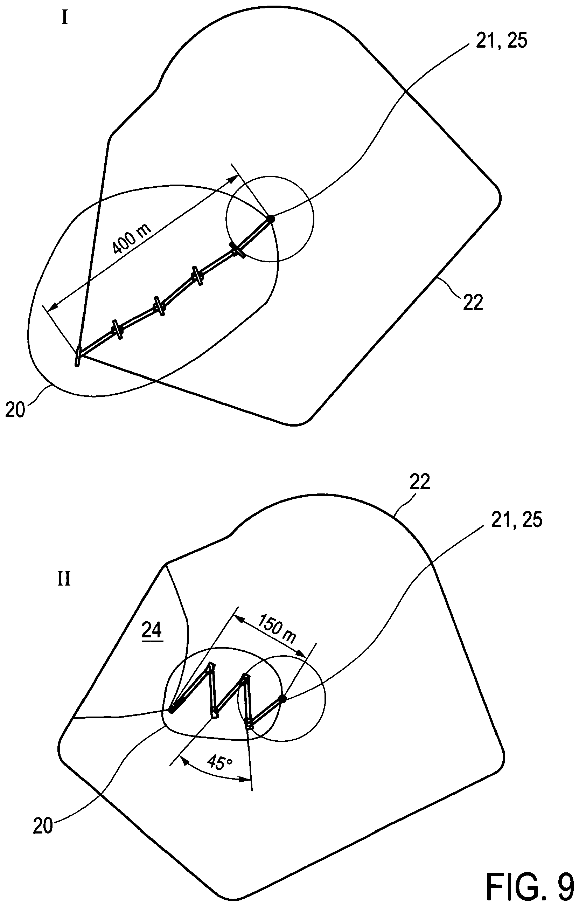

Fig. 9 zeigt schematisch zwei Ansichten der Berieselungsanlage 20 gemäß Figur 8 beim Umfahren eines Hindernisses 24.

Im Zeitpunkt I, in der Figur oben dargestellt. sind die fünf Rohrleitungen ausgestreckt und die Winkel α zwischen je zwei der Längsachsen betragen nahezu 180°. Im Zeitpunkt I beträgt die Breite des Streifens, über welchen das Fluid abgegeben werden kann, hingegen etwa 400 m.

Im Zeitpunkt II, in der Figur unten dargestellt, ist die Berieselungsanlage entsprechend Figur 8 bis auf eine Breite von etwa 150 m zusammengezogen. Die Winkel α zwischen je zwei der Längsachsen betragen weniger als 50°.

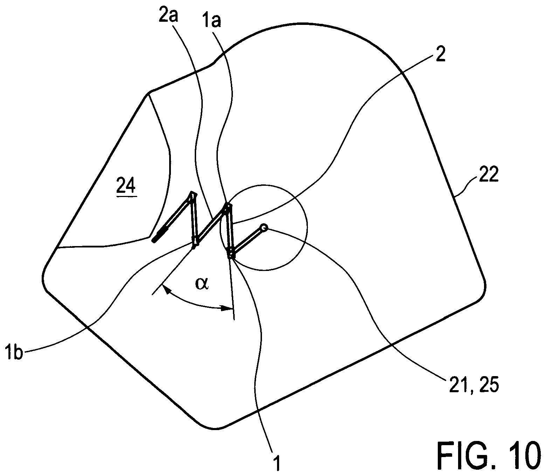

Fig. 10 zeigt schematisch eine weitere Ansicht der Berieselungsanlage gemäß Figur 8. Markiert ist der Winkel α zwischen den Rohrleitungen 2, 2a, wobei der Winkel α in einer Ebene im Wesentlichen senkrecht zu der ersten Drehachse der verfahrbaren Stütze 1 angeordnet ist.

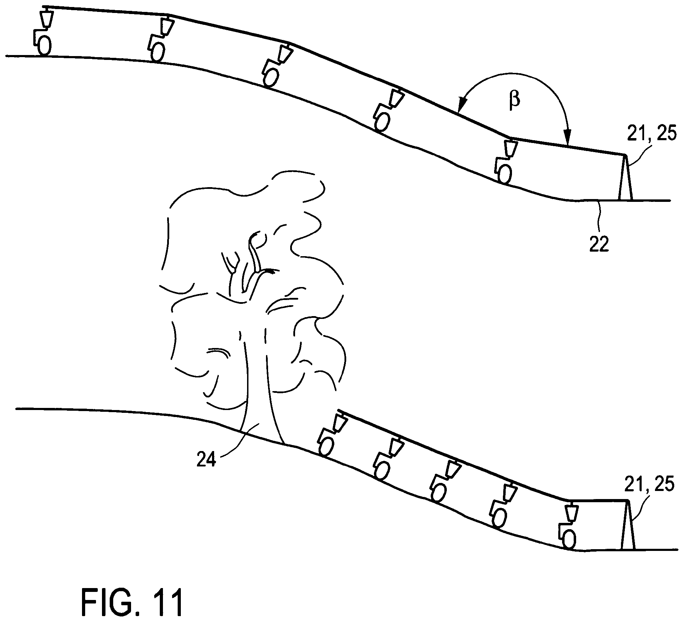

Fig. 11 zeigt schematisch eine weitere Ansicht der Berieselungsanlage gemäß Figur 8, beim Umfahren eines Hindernisses 24. Die Verteilfläche 22 weist abschnittsweise einen Hang auf. Oben in der Figur erstreckt sich die Berieselungsanlage vom Zentralturm 21 entlang des Hangs bis zur Hochfläche.

Unten in der Figur ist die Berieselungsanlage zusammengezogen, um das Hindernis umfahren zu können.

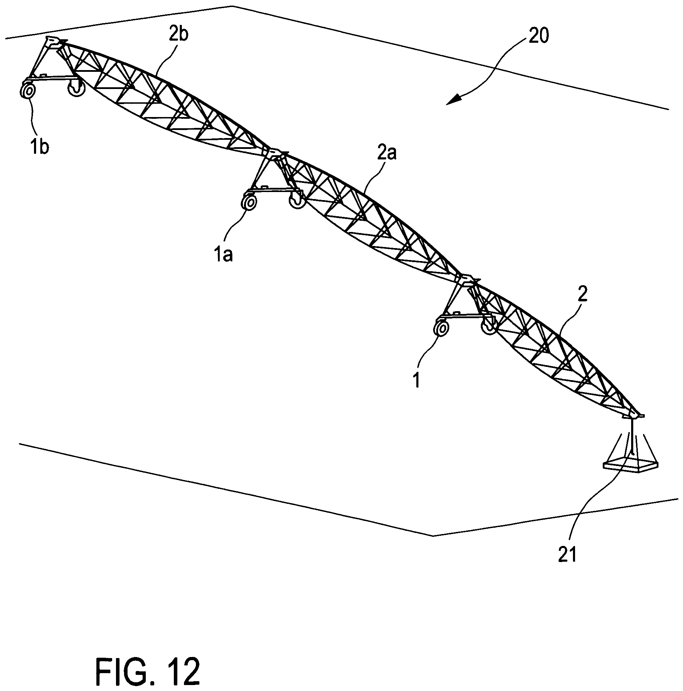

Fig. 12 zeigt schematisch und perspektivisch eine Berieselungsanlage 20 mit mehreren verfahrbaren Stützen 1, 1a, 1b gemäß einer der Figuren 2-5. Die Rohrleitungen 2, 2a, 2b sind jeweils mit einem Fachwerk abgestützt und bogenförmig ausgebildet. Die Rohrleitungen 2, 2a, 2b sind miteinander fluidleitend verbunden. Auf der Verteilfläche ist ein Zentralturm 21 positioniert. Mit dem Zentralturm ist ein Ende einer ersten Rohrleitung 2 verbunden. Das andere Ende der ersten Rohrleitung 2 ist durch die verfahrbare Stütze 1 abgestützt. Dieselbe verfahrbare Stütze 1 sowie eine zweite dieser verfahrbaren Stützen 1a stützen die zweite Rohrleitung 2a ab. Die zweite verfahrbare Stütze 1a und die dritte verfahrbare Stütze 1 b stützen die dritte Rohrleitung 2b ab. Die Winkel α zwischen je zwei dieser Rohrleitungen betragen jeweils im Wesentlichen 180°. Vorliegend ist die Verteilfläche im Wesentlichen eben, sodass auch die Winkel β zwischen je zwei dieser Rohrleitungen jeweils im Wesentlichen 180° betragen. Die Berieselungsanlage 20 wird aus dem Zentralturm 21 mit dem zu verteilenden Fluid versorgt.

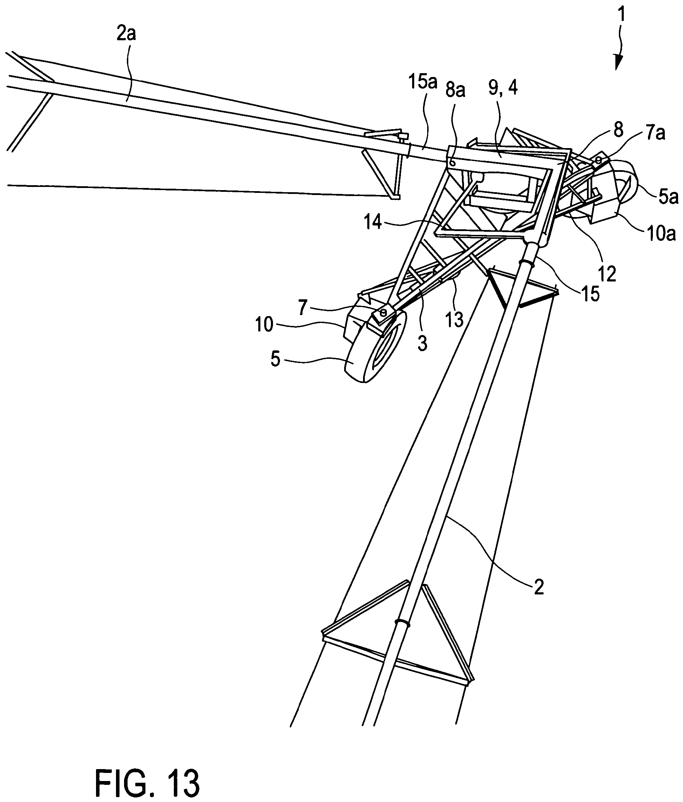

Fig. 13 zeigt schematisch und perspektivisch eine verfahrbare Stütze 1 der Fig.12. Die verfahrbare Stütze 1 stützt die beiden Rohrleitungen 2, 2a ab. Die verfahrbare Stütze 1 ist im Wesentlichen entsprechend den Figuren 2-5 ausgebildet. Betreffend die verfahrbare Stütze gelten auch die Ausführungen zu den Figuren 2-5.

Die Stützeinrichtung 3 der verfahrbaren Stütze 1 ist mit einem Fachwerk aus metallischen Profilstäben ausgebildet. Die Stützeinrichtung 3 weist eine Montageplatte auf, mit welcher einer dieser Drehkränze verbunden ist.

Die Rohrhalterung 4 ist ebenfalls mit dem Drehkranz verbunden. Das Gelenkstützelement 9 weist zwei Gelenkeinrichtungen 8, 8a auf. Mit den Gelenkeinrichtungen 8, 8a sind jeweils einer dieser Rohrverbindungsabschnitte 15, 15a verbunden. Die Rohrverbindungsabschnitte 15, 15a sind durch einen dritten, nicht dargestelltes, insbesondere schlauchförmigen Rohrverbindungsabschnitt miteinander fluidleitend verbunden, wobei der dritte Rohrverbindungsabschnitt durch das Gelenkstützelement abgestützt ist. Die Abwinkelung der beiden Rohrleitungen ist durch Anschlagelemente 14, 14a, welche mit dem Rohrverbindungsabschnitt 15 und dem Gelenkstützelement 9 verbunden sind, welche jeweils mit zwei Zugstäben ausgebildet sind, begrenzt.

Beide Bewegungseinrichtungen 5, 5a sind mit elektromotorisch angetriebenen Rädern und Achsträgern 10, 10a ausgebildet und sind bezüglich des Stützelements lenkbar. Die Achsträger sind mit der Koppelstange 12 derart verbunden, dass Lenkwinkel der Bewegungseinrichtungen im Wesentlichen denselben Betrag aufweisen, aber entgegengesetzte Richtung bzw. Vorzeichen. Eine erste Stelleinrichtung 13 dient zum Stellen der Koppelstange und zum Lenken der Bewegungseinrichtungen.

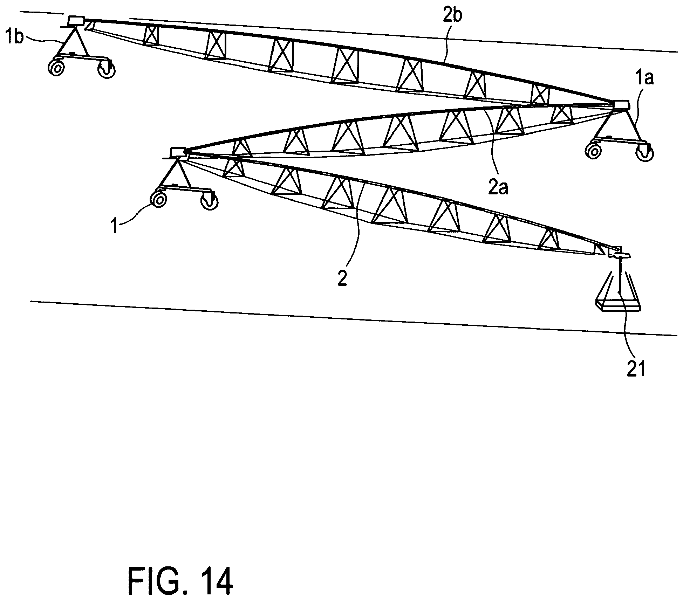

Fig. 14 zeigt schematisch und perspektivisch die Berieselungsanlage 20 gemäß Fig. 12 mit abgewinkelten Rohrleitungen 2, 2a, 2b. Es gelten auch die Ausführungen zu den Figuren 12 und 13. Mit der Abwinkelung der Rohrleitungen ist die Breite des Streifens der Teilfläche, an welche das Fluid abzugeben ist, gegenüber der Breite des Streifens gemäß Figur 12 verringert.

### Bezugszeichen

- 1, 1a: Verfahrbare Stütze
- 2, 2a: Rohrleitung
- 3: Stützeinrichtung
- 4, 4a: Rohrhalterung
- 5, 5a: Bewegungseinrichtung
- 7, 7a, 7b: Verbindungselement, Teil der Stützeinrichtung
- 8, 8a: Gelenkeinrichtung der Rohrhalterung
- 9: Gelenkstützelement der Rohrhalterung
- 10, 10a: Achsträger der Bewegungseinrichtung
- 11, 11a: Antriebseinrichtung der Bewegungseinrichtung
- 12: Koppelstange für Achsträger
- 13: erste Stelleinrichtung zum Lenken einer Bewegungseinrichtung
- 14, 14a: Anschlagelement
- 15, 15a, 15b: Rohrverbindungsabschnitt der Rohrhalterung
- 16: zweite Stelleinrichtung zum Stellen eines der Rohrverbindungsabschnitte
- 20: Berieselungsanlage mit wenigstens einer verfahrbaren Stütze und wenigstens einer Rohrleitung
- 21: Zentralturm
- 22: Verteilfläche, landwirtschaftliche Nutzfläche
- 23: Steuereinrichtung der Berieselungsanlage
- 24: Hindernis
- 25: Koordinatenursprung
- E₁: Hauptebene mit Verbindungselementen
- E₂: Winkelebene, in welcher die Schenkel des Winkels α angeordnet sind
- A₁: erste Drehachse durch die Rohrhalterung
- A₂: zweite Drehachse durch die Bewegungseinrichtung
- A₃: dritte Drehachse, um welche die Bewegungseinrichtung abrollen kann
- A₄: vierte Drehachse durch die Rohrhalterung
- A₅: fünfte Drehachse durch die Rohrhalterung
- α: Winkel zwischen zwei dieser Rohrleitungen, die Schenkel des Winkels sind in der Winkelebene E₂ angeordnet
- β: Winkel zwischen zwei dieser Rohrleitungen in einer Ebene senkrecht zu der Winkelebene E₂
- I: Zustand 1
- II: Zustand 2

## Patentansprüche

1. Verfahrbare Stütze **(1),** ausgestaltet zum Abstützen wenigstens einer Rohrleitung **(2, 2a),** wobei die Rohrleitung **(2, 2a)** zur Abgabe eines Fluids dient, mit
einer Stützeinrichtung **(3),** welche wenigstens drei Verbindungselemente **(7, 7a, 7b)** aufweist, wobei vorzugsweise die drei Verbindungselemente **(7, 7a, 7b)** in einer Hauptebene E₁ angeordnet sind,
einer Rohrhalterung **(4),** welche zur lösbaren Verbindung mit wenigstens einer dieser Rohrleitungen **(2, 2a)** ausgestaltet ist, welche um eine erste Drehachse A₁ drehbar mit dem dritten Verbindungselement **(7b)** der Stützeinrichtung **(3)** verbunden ist,
zwei Bewegungseinrichtungen **(5, 5a),** welche jeweils mit dem ersten Verbindungselement **(7)** oder dem zweiten Verbindungselement **(7a),** der Stützeinrichtung **(3)** verbunden sind, welche zum Abrollen um je eine dritte Drehachse A₃ ausgestaltet sind, wobei wenigstens eine dieser Bewegungseinrichtungen **(5, 5a)** um eine zweite Drehachse A₂ drehbar mit der Stützeinrichtung **(3)** verbunden ist, wobei die zweite Drehachse A₂ im Wesentlichen parallel zu der ersten Drehachse A₁ angeordnet ist,
wobei vorzugweise die erste Drehachse A₁ und die zweite Drehachse A₂ im Wesentlichen parallel zu der Hauptebene angeordnet sind, wobei vorzugsweise wenigstens eine dieser dritten Drehachsen A₃ im Wesentlichen senkrecht zu der zweiten Drehachse A₂ angeordnet ist,
**dadurch gekennzeichnet, dass**
die Rohrhalterung **(4)** ausgebildet ist mit
einem Gelenkstützelement **(9),** welches mit dem dritten Verbindungselement **(7b)** der Stützeinrichtung **(3)** verbindbar ist, und
einer ersten Gelenkeinrichtung **(8),** welche Teil des Gelenkstützelements **(9)** ist, welche zur Rotation um eine vierte Drehachse A₄ ausgestaltet ist, wobei die vierte Drehachse A₄ im Wesentlichen parallel zu der ersten Drehachse A₁ ausrichtbar ist.

2. Verfahrbare Stütze **(1)** gemäß Anspruch 1, wobei die Rohrhalterung **(4)** ausgebildet ist mit
einer zweiten Gelenkeinrichtung **(8a),** welche Teil des Gelenkstützelements **(9)** ist, welche zur Rotation um eine fünfte Drehachse A₅ ausgestaltet ist, wobei die fünfte Drehachse A₅ im Wesentlichen senkrecht zu der vierten Drehachse A₄ ausgerichtet ist.

3. Verfahrbare Stütze **(1)** gemäß einem der vorhergehenden Ansprüche, wobei wenigstens eine dieser Bewegungseinrichtungen **(5, 5a)** ausgebildet ist mit
wenigstens einem Laufrad und/oder mit einer Gleiskette,
einem Achsträger **(10),** welcher mit dem ersten Verbindungselement **(7)** oder dem zweiten Verbindungselement **(7a)** verbindbar ist, welcher zum Abstützen, vorzugsweise zum drehbaren Lagern, des Laufrads oder der Gleiskette dient,
vorzugsweise einer Antriebseinrichtung **(11),** ausgestaltet zum Antrieb der Bewegungseinrichtung **(5, 5a),** vorzugsweise des Laufrads oder der Gleiskette, wobei vorzugsweise die Antriebseinrichtung **(11)** einen Elektromotor aufweist, wobei vorzugsweise die Antriebseinrichtung **(11)** lösbar mit dem Achsträger **(10)** verbindbar ist.

4. Verfahrbare Stütze **(1)** gemäß einem der vorhergehenden Ansprüche, wobei
zwei dieser Bewegungseinrichtungen **(5, 5a)** jeweils um eine zweite Drehachse A₂ drehbar mit der Stützeinrichtung **(3)** verbunden sind,
vorzugsweise die Bewegungseinrichtungen **(5, 5a),** besonders bevorzugt deren Achsträger **(10, 10a),** mit einer Koppelstange **(12)** verbindbar sind, besonders bevorzugt derart verbindbar sind, dass die Bewegungseinrichtungen **(5, 5a)** zueinander proportional lenkbar sind,
vorzugsweise eine erste Stelleinrichtung **(13),** welche ausgestaltet ist zum Lenken wenigstens einer der Bewegungseinrichtungen **(5, 5a),** besonders bevorzugt zum Stellen wenigstens eines der Achsträger **(10, 10a)** und/oder zum Stellen der Koppelstange **(12),** welche mit der Stützeinrichtung **(3)** und/oder der Bewegungseinrichtung **(5, 5a)** verbindbar ist.

5. Verfahrbare Stütze **(1)** gemäß einem der vorhergehenden Ansprüche, wobei
wenigstens eine der Gelenkeinrichtungen **(8, 8a),** vorzugsweise die erste Gelenkeinrichtung **(8),** mit wenigstens einem Anschlagelement **(14)** ausgebildet ist,
das Anschlagelement **(14)** der Begrenzung der Rotation um die vierte Drehachse A₄ oder um die fünfte Drehachse A₅ dient,
vorzugsweise das Anschlagelement **(14)** mit zwei Zugstangen ausgebildet ist.

6. Verfahrbare Stütze **(1)** gemäß einem der vorhergehenden Ansprüche, wobei
das dritte Verbindungselement **(7b)** mit einem Drehkranz und/oder die Stützeinrichtung **(3)** mit einer Montageplatte ausgebildet ist,
vorzugsweise der Drehkranz mit der Montageplatte und/oder mit dem Gelenkstützelement **(9)** verbindbar ist.

7. Verfahrbare Stütze **(1)** gemäß einem der vorhergehenden Ansprüche, wobei
die Rohrhalterung **(4)** mit wenigstens zwei Rohrverbindungsabschnitten **(15, 15a)** ausgebildet ist,
der erste Rohrverbindungsabschnitt **(15)** mit der ersten Gelenkeinrichtung **(8)** und der zweite Rohrverbindungsabschnitt **(15a)** mit der zweiten Gelenkeinrichtung **(8a)** verbindbar sind,
vorzugsweise der erste Rohrverbindungsabschnitt **(15)** und der zweite Rohrverbindungsabschnitt **(15a)** durch einen, besonders bevorzugt schlauchförmigen, dritten Rohrverbindungsabschnitt **(15b)** fluidleitend verbindbar sind.

8. Verfahrbare Stütze **(1)** gemäß Anspruch 4, mit einer zweiten Stelleinrichtung **(13),** welche ausgestaltet ist zum Stellen eines Winkels α, dessen erster Schenkel im Wesentlichen parallel zu einer Längsachse eines der Rohrverbindungsabschnitte **(15, 15a)** bzw. einer der Rohrleitungen **(2, 2a)** ausgerichtet ist und dessen zweiter Schenkel senkrecht zur Hauptebene E₁ ausgerichtet ist,
wobei vorzugsweise die Schenkel des Winkels α in einer Winkelebene E₂ angeordnet sind, welche im Wesentlichen senkrecht zur ersten Drehachse A₁ ausgerichtet ist.

9. Berieselungsanlage **(20),** vorzugsweise ausgestaltet zum Verteilen eines Fluids auf einer Verteilfläche **(22),** aufweisend wenigstens zwei verfahrbare Stützen **(1,1a) nach einem der Ansprüche 1 bis 8** und wenigstens eine erste Rohrleitung **(2, 2a),**
wobei ein erstes Ende der ersten Rohrleitung **(2, 2a)** mit der ersten verfahrbaren Stütze **(1)** und ein zweites Ende der ersten Rohrleitung **(2)** mit der zweiten verfahrbaren Stütze **(1a)** verbindbar ist,
wobei vorzugsweise die Berieselungsanlage **(20)** ausgestaltet ist, aus einem ersten Zustand, in welchem die Geschwindigkeitsvektoren der beiden verfahrbaren Stützen **(1, 1a)** zueinander im Wesentlichen parallel sind, umkehrbar in einen zweiten Zustand überführt zu werden, in welchem die Geschwindigkeitsvektoren der beiden verfahrbaren Stützen **(1, 1a)** zueinander nicht parallel sind.

10. Berieselungsanlage **(20)** gemäß Anspruch 9, mit einer dritten dieser verfahrbaren Stützen **(1 b)** und einer zweiten dieser Rohrleitungen **(2, 2a),**
wobei ein erstes Ende der zweiten Rohrleitung **(2a)** mit der zweiten verfahrbaren Stütze **(1a)** und ein zweites Ende der zweiten Rohrleitung **(2, 2a)** mit der dritten verfahrbaren Stütze **(1 b)** verbindbar ist,
wobei vorzugsweise die Berieselungsanlage **(20)** ausgestaltet ist, aus einem ersten Zustand, in welchem die Geschwindigkeitsvektoren der verfahrbaren Stützen **(1,1a, 1b)** zueinander im Wesentlichen parallel sind, umkehrbar in einen zweiten Zustand überführt zu werden, in welchem die Geschwindigkeitsvektoren von wenigstens zwei der verfahrbaren Stützen **(1, 1a, 1b)** zueinander nicht parallel sind.

11. Berieselungsanlage **(20),** vorzugsweise ausgestaltet zum Verteilen eines Fluids auf einer, insbesondere mehreckigen, Verteilfläche **(22),** aufweisend wenigstens zwei verfahrbare Stützen **(1, 1a)** nach einem der Ansprüche 1 bis 8 und wenigstens zwei Rohrleitungen **(2, 2a),** wobei
die erste Rohrleitung **(2)** mit der Rohrhalterung **(4)** der ersten verfahrbaren Stütze **(1)** verbindbar ist, und mit einem unabhängigen Zentralturm **(21),** welcher auf der Verteilfläche angeordnet ist, verbindbar ist und das zu verteilende Fluid aus dem Zentralturm **(21)** aufnehmen kann,
die zweite Rohrleitung **(2)** mit der Rohrhalterung **(4)** der ersten verfahrbaren Stütze **(1)** und mit der Rohrhalterung **(4a)** der zweiten verfahrbaren Stütze **(1a)** verbindbar ist,
wobei vorzugsweise die Berieselungsanlage **(20)** ausgestaltet ist, aus einem ersten Zustand, in welchem die Geschwindigkeitsvektoren der beiden verfahrbaren Stützen **(1, 1a)** zueinander im Wesentlichen parallel sind, umkehrbar in einen zweiten Zustand überführt zu werden, in welchem die Geschwindigkeitsvektoren der beiden verfahrbaren Stützen **(1, 1a)** zueinander nicht parallel sind.

12. Berieselungsanlage **(20)** gemäß Anspruch 11, mit einer dritten dieser verfahrbaren Stützen **(1 b)** und einer dritten dieser Rohrleitungen **(2b),**
wobei ein erstes Ende der dritten Rohrleitung **(2b)** mit der zweiten verfahrbaren Stütze **(1a)** und ein zweites Ende der dritten Rohrleitung **(2b)** mit der dritten verfahrbaren Stütze **(1 b)** verbindbar ist,
wobei vorzugsweise die Berieselungsanlage **(20)** ausgestaltet ist, aus einem ersten Zustand, in welchem die Geschwindigkeitsvektoren der verfahrbaren Stützen **(1,1a, 1b)** zueinander im Wesentlichen parallel sind, umkehrbar in einen zweiten Zustand überführt zu werden, in welchem die Geschwindigkeitsvektoren von wenigstens zwei der verfahrbaren Stützen **(1,1a, 1b)** zueinander nicht parallel sind.

13. Verfahren zum Betreiben einer Berieselungsanlage **(20)** gemäß einem der Ansprüche 9 bis 12, wobei die Berieselungsanlage **(20)** eine Steuereinrichtung **(23)** aufweist, wobei in der Verteilfläche, auf welcher das Fluid zu verteilen ist, ein Koordinatenursprung definiert ist, wobei mit wenigstens einem der Schritte
S1 Vorgeben eines Geschwindigkeitsvektors für eine der verfahrbaren Stützen **(1,1a, 1b)** abhängig von einem ersten Ortsvektor der verfahrbaren Stütze **(1,1a, 1b),** wobei der erste Ortsvektor auf die Position der verfahrbaren Stütze **(1,1a, 1b)** bzgl. des Koordinatenursprungs, vorzugsweise zu einem ersten Zeitpunkt, hinweist,
S2 Vorgeben des Geschwindigkeitsvektors für eine der verfahrbaren Stützen **(1,1a, 1b)** an einer ersten Position, welche durch den ersten Ortsvektor beschreibbar ist, abhängig von dem ersten Ortsvektor und einem zweiten Ortsvektor, wobei der zweite Ortsvektor auf die Position der verfahrbaren Stütze **(1,1a, 1b)** bzgl. eines Koordinatenursprungs zu einem späteren Zeitpunkt als dem ersten Zeitpunkt hinweist,
S3 Vorgeben einer Abrollgeschwindigkeit, mit welcher eine dieser Bewegungseinrichtungen **(5, 5a)** um die dritte Drehachse A₃ abrollen soll, und/oder eines Lenkwinkels der Bewegungseinrichtung **(5, 5a),** abhängig vom Geschwindigkeitsvektor für die verfahrbare Stütze **(1,1a, 1b),** insbesondere nach Schritt S1 oder S2, wobei der Lenkwinkel zwischen der dritten Drehachse A₃ der Bewegungseinrichtung **(5, 5a)** und der Hauptebene E₁ zu messen ist,
S4 Verringern des Betrags des Geschwindigkeitsvektors einer ersten dieser verfahrbaren Stützen **(1,1a, 1b),** wenn der Betrag des Geschwindigkeitsvektors einer zweiten dieser verfahrbaren Stützen **(1,1a, 1b)** einen Grenzbetrag überschreitet, wobei vorzugsweise die zweite verfahrbare Stütze vom Koordinatenursprung weiter entfernt ist, als die erste verfahrbare Stütze, insbesondere nach Schritt S1 oder S2,
S6 Vorgeben eines Winkels zwischen dem Geschwindigkeitsvektor der zweiten verfahrbaren Stütze und einem Radius ausgehend vom Koordinatenursprung durch den Ortsvektor der zweiten verfahrbaren Stütze in Abhängigkeit des Winkels zwischen dem Geschwindigkeitsvektor der ersten verfahrbaren Stütze und dem Radius, insbesondere nach Schritt S1 oder S2,
vorzugsweise mit
S5 Vergrößern eines Fluidstroms durch eine dieser Rohrleitungen **(2, 2a),** vorzugsweise proportional, mit größerem Betrag des Geschwindigkeitsvektors einer dieser verfahrbaren Stützen **(1, 1a, 1b),** insbesondere umkehrbar, insbesondere nach Schritt S1 oder S2.

14. Verfahren zum Nachrüsten einer vorhandenen Berieselungsanlage, aufweisend wenigstens eine Rohrleitung und wenigstens einen Fahrturm zum Abstützen und Bewegen einer Rohrleitung, mit einer verfahrbaren Stütze **(1, 1 a, 1 b)** nach einem der Ansprüche 1 bis 8, mit wenigstens einem der folgenden Schritte:
S7 Trennen einer dieser Rohrleitungen von einem dieser Fahrtürme,
S8 Bereitstellen einer dieser verfahrbaren Stützen **(1, 1a, 1 b),** deren Rohrhalterung **(4),** insbesondere deren Rohrverbindungsabschnitte **(15, 15a),** zur Verbindung mit wenigstens einer dieser Rohrleitungen ausgestaltet sind,
S9 Verbinden, insbesondere fluidleitend, wenigstens einer dieser Rohrleitungen mit der Rohrhalterung **(4),** insbesondere mit einem dieser Rohrverbindungsabschnitte **(15, 15a).**

15. Verwendung einer verfahrbaren Stütze **(1, 1a, 1 b)** nach einem der Ansprüche 1 bis 8 mit einer vorhandenen Berieselungsanlage, vorzugsweise zum Nachrüsten der vorhandenen Berieselungsanlage.

## Claims

1. Movable support **(1),** designed to support at least one pipeline **(2, 2a),** the pipeline **(2, 2a)** being used to dispense a fluid, comprising
a support device **(3)** which has at least three
connection elements **(7, 7a, 7b),** the three connection elements **(7, 7a, 7b)** preferably being arranged in a main plane E₁,
a pipe mounting **(4)** which is designed to be detachably connected to at least one of said pipelines **(2, 2a),** which is connected to the third connection element **(7b)** of the support device **(3)** so as to be rotatable about a first rotational axis A₁,
two movement devices **(5, 5a)** which are each connected to the first connection element **(7)** or to the second connection element **(7a)** of the support device **(3)** and which are each designed to roll about one third rotational axis A₃, respectively, at least one of said movement devices **(5, 5a)** being connected to the support device **(3)** so as to be rotatable about a second rotational axis A₂, the second rotational axis A₂ being arranged substantially in parallel with the first rotational axis A₁,
the first rotational axis A₁ and the second rotational axis A₂ preferably being arranged substantially in parallel with the main plane, at least one of said third rotational axes A₃ preferably being arranged substantially perpendicularly to the second rotational axis A₂, **characterised in that**
the pipe mounting **(4)** is formed having a joint support element **(9)** which can be connected to the third connection element **(7b)** of the support device **(3),** and
a first joint device **(8)** which is part of the joint support element **(9)** and which is designed to rotate about a fourth rotational axis A₄, the fourth rotational axis A₄ being able to be oriented substantially in parallel with the first rotational axis A₁.

2. Movable support **(1)** according to claim 1, wherein the pipe mounting **(4)** is formed having a second joint device **(8a)** which is part of the joint support element **(9)** and which is designed to rotate about a fifth rotational axis A₅, wherein the fifth rotational axis A₅ is oriented substantially perpendicularly to the fourth rotational axis A₄.

3. Movable support **(1)** according to either of the preceding claims, wherein at least one of said movement devices **(5, 5a)** is formed having
at least one running wheel and/or having a crawler track,
an axle support **(10)** which can be connected to the first connection element **(7)** or the second connection element **(7a)** and which is used to support, preferably to rotatably mount, the running wheel or the crawler track,
preferably a drive device **(11)** which is designed to drive the movement device **(5, 5a),** preferably the running wheel or the crawler track, wherein the drive device **(11)** preferably comprises an electric motor, wherein the drive device **(11)** can preferably be detachably connected to the axle support **(10).**

4. Movable support **(1)** according to any one of the preceding claims, wherein
two of said movement devices **(5, 5a)** are each connected to the support device **(3)** so as to be rotatable about a second rotational axis A₂,
preferably, the movement devices **(5, 5a),** particularly preferably the axle supports **(10, 10a)** thereof, can be connected to a coupling rod **(12),** particularly preferably can be connected such that the movement devices **(5, 5a)** can be steered proportionally to one another,
preferably, a first adjustment device **(13)** which is designed to steer at least one of the movement devices **(5, 5a),** particularly preferably to adjust at least one of the axle supports **(10, 10a)** and/or to adjust the coupling rod **(12)** and which can be connected to the support device **(3)** and/or the movement device **(5, 5a).**

5. Movable support **(1)** according to any one of the preceding claims, wherein
at least one of the joint devices **(8, 8a),** preferably the first joint device **(8),** is formed having at least one stop element **(14),**
the stop element **(14)** is used to limit the rotation about the fourth rotational axis A₄ or about the fifth rotational axis A₅,
the stop element **(14)** is preferably formed having two connecting rods.

6. Movable support **(1)** according to any one of the preceding claims, wherein
the third connection element **(7b)** is formed having a slewing ring and/or the support device **(3)** is formed having a mounting plate,
the slewing ring can preferably be connected to the mounting plate and/or to the joint support element **(9).**

7. Movable support **(1)** according to any one of the preceding claims, wherein
the pipe mounting **(4)** is formed having at least two pipe connection portions **(15, 15a),**
the first pipe connection portion **(15)** can be connected to the first joint device **(8),** and the second pipe connection portion **(15a)** can be connected to the second joint device **(8a),** preferably, the first pipe connection portion **(15)** and the second pipe connection portion **(15a)** can be fluidically connected by a third pipe connection portion **(15b)** that is particularly preferably tubular.

8. Movable support **(1)** according to claim 4, comprising a second adjustment device **(13)** which is designed to adjust an angle α, the first side of which is oriented substantially in parallel with a longitudinal axis of one of the pipe connection portions **(15, 15a)** or one of the pipelines **(2, 2a)** and the second side of which is oriented perpendicularly to the main plain E₁,
wherein the side of the angle α is preferably arranged in an angular plane E₂ which is oriented substantially perpendicularly to the first rotational axis A₁.

9. Sprinkler system **(20),** preferably designed to distribute a fluid onto a distribution surface **(22),** comprising at least two movable supports **(1, 1a) according to any one of claims 1 to 8** and at least one first pipeline **(2, 2a),**
wherein a first end of the first pipeline **(2, 2a)** can be connected to the first movable support **(1)** and a second end of the first pipeline **(2)** can be connected to the second movable support **(1a),**
wherein the sprinkler system **(20)** is preferably designed to be reversibly transferred from a first state in which the velocity vectors of the two movable supports **(1, 1 a)** are substantially in parallel with one another, into a second state in which the velocity vectors of the two movable supports **(1, 1a)** are not in parallel with one another.

10. Sprinkler system **(20)** according to claim 9, comprising a third of said movable supports **(1 b)** and a second of said pipelines **(2, 2a),**
wherein a first end of the second pipeline **(2a)** can be connected to the second movable support **(1a)** and a second end of the second pipeline **(2, 2a)** can be connected to the third movable support **(1b),**
wherein the sprinkler system **(20)** is preferably designed to be reversibly transferred from a first state in which the velocity vectors of the two movable supports **(1, 1a, 1b)** are substantially in parallel with one another, into a second state in which the velocity vectors of at least two of the movable supports **(1, 1 a, 1 b)** are not in parallel with one another.

11. Sprinkler system **(20),** which is preferably designed to distribute a fluid onto a distribution surface **(22)** that is in particular polygonal, and which comprises at least two movable supports **(1, 1a)** according to any one of claims 1 to 8 and at least two pipelines **(2, 2a),** wherein
the first pipeline **(2)** can be connected to the pipe mounting **(4)** of the first movable support **(1)** and can be connected to an independent central tower **(21)** arranged on the distribution surface, and can receive the fluid to be distributed from the central tower **(21),**
the second pipeline **(2)** can be connected to the pipe mounting **(4)** of the first movable support **(1)** and to the pipe mounting **(4a)** of the second movable support **(1a),**
wherein the sprinkler system **(20)** is preferably designed to be reversibly transferred from a first state in which the velocity vectors of the two movable supports **(1, 1a)** are substantially in parallel with one another into a second state in which the velocity vectors of the two movable supports **(1, 1a)** are not in parallel with one another.

12. Sprinkler system **(20)** according to claim 11, comprising a third of said movable supports **(1 b)** and a third of said pipelines **(2b),**
wherein a first end of the third pipeline **(2b)** can be connected to the second movable support **(1a)** and a second end of the third pipeline **(2b)** can be connected to the third movable support **(1 b),**
wherein the sprinkler system **(20)** is preferably designed to be reversibly transferred from a first state in which the velocity vectors of the movable supports **(1,1a, 1b)** are substantially in parallel with one another into a second state in which the velocity vectors of at least two of the movable supports **(1, 1a, 1b)** are not in parallel with one another.

13. Method for operating a sprinkler system **(20)** according to any one of claims 9 to 12, wherein the sprinkler system **(20)** comprises a control device **(23),** wherein a point of origin is defined in the distribution surface on which the fluid is to be distributed, wherein said method comprises at least one of the steps of:
S1 specifying a velocity vector for one of the movable supports **(1,1a, 1 b)** depending on a first position vector of the movable support **(1,1a, 1b),** wherein the first position vector gives the position of the movable support **(1, 1a, 1 b)** relative to the point of origin, preferably at a first point in time,
S2 specifying the velocity vector for one of the movable supports **(1, 1a, 1 b)** at a first position, which can be described by the first position vector, depending on the first position vector and a second position vector, wherein the second position vector gives the position of the movable support **(1, 1 a, 1b)** relative to a point of origin at a later point in time than the first point in time,
S3 specifying a rolling velocity with which one of said movement devices **(5, 5a)** is intended to roll about the third rotational axis A₃, and/or of a steering angle of the movement device **(5, 5a),** depending on the velocity vector for the movable support **(1, 1a, 1b),** in particular after step S1 or S2, wherein the steering angle is to be measured between the third rotational axis A₃ of the movement device **(5, 5a)** and the main plane E₁,
S4 reducing the magnitude of the velocity vector of a first of said movable supports **(1, 1a, 1b)** if the magnitude of the velocity vector of a second of said movable supports **(1, 1a, 1 b)** exceeds a threshold magnitude, wherein the second movable support is preferably further away from the point of origin than the first movable support, in particular after step S1 or S2,
S6 specifying an angle between the velocity vector of the second movable support and a radius starting from the point of origin and extending through the position vector of the second movable support depending on the angle between the velocity vector of the first movable support and the radius, in particular after step S1 or S2,
preferably comprising
S5 increasing a fluid flow through one of said pipelines **(2, 2a),** preferably proportionally, at a higher magnitude of the velocity vector of one of said movable supports **(1, 1a, 1 b),** in particular reversibly, in particular after step S1 or S2.

14. Method for retrofitting an existing sprinkler system
comprising at least one pipeline and at least one travelling tower for supporting and moving a pipeline, comprising a movable support **(1, 1 a, 1b)** according to any one of claims 1 to 8, said method comprising at least one of the following steps:
S7 separating one of said pipelines from one of said travelling towers,
S8 providing one of said movable supports **(1, 1 a, 1b),** the pipe mounting **(4)** of which, in particular the pipe connection portions **(15, 15a)** of which, are designed to connect to at least one of said pipelines,
S9 connecting, in particular fluidically, at least one of said pipelines to the pipe mounting (4), in particular to one of said pipe connection portions **(15, 15a).**

15. Use of a movable support **(1, 1a, 1 b)** according to any one of claims 1 to 8 together with an existing sprinkler system, preferably for retrofitting the existing sprinkler system.

## Revendications

1. Support mobile (1), configuré pour soutenir au moins une tuyauterie (2, 2a), dans lequel la tuyauterie (2, 2a) sert à la distribution d'un fluide, avec
un dispositif de support (3), qui présente au moins trois éléments de liaison (7, 7a, 7b), dans lequel de préférence les trois éléments de liaison (7, 7a, 7b) sont agencés dans un plan principal E₁,
une fixation de tuyau (4), qui est configurée pour la liaison amovible avec au moins une de ces tuyauteries (2, 2a), qui est reliée au troisième élément de liaison (7b) du dispositif de support (3) de manière rotative autour d'un premier axe de rotation A₁, deux dispositifs de déplacement (5, 5a), qui sont reliés respectivement au premier élément de liaison (7) ou au deuxième élément de liaison (7a) du dispositif de support (3), qui sont configurés pour le déroulement autour de respectivement un troisième axe de rotation A₃, dans lequel au moins un de ces dispositifs de déplacement (5, 5a) est relié au dispositif de support (3) de manière rotative autour d'un deuxième axe de rotation A₂, dans lequel le deuxième axe de rotation A₂ est agencé de manière sensiblement parallèle au premier axe de rotation A₁,
dans lequel de préférence le premier axe de rotation A₁ et le deuxième axe de rotation A₂ sont agencés de manière sensiblement parallèle au plan principal,
dans lequel de préférence au moins un de ces troisièmes axes de rotation A₃ est agencé de manière sensiblement perpendiculaire au deuxième axe de rotation A₂, **caractérisé en ce que**
la fixation de tuyau (4) est réalisée avec
un élément de support d'articulation (9), qui peut être relié au troisième élément de liaison (7b) du dispositif de support (3), et
un premier dispositif d'articulation (8), qui fait partie de l'élément de support d'articulation (9), qui est configuré pour la rotation autour d'un quatrième axe de rotation A₄, dans lequel le quatrième axe de rotation A₄ peut être orienté de manière sensiblement parallèle au premier axe de rotation A₁.

2. Support mobile (1) selon la revendication 1, dans lequel la fixation de tuyau (4) est réalisée avec
un deuxième dispositif d'articulation (8a), qui fait partie de l'élément de support d'articulation (9), qui est configuré pour la rotation autour d'un cinquième axe de rotation A₅, dans lequel le cinquième axe de rotation A₅ est orienté de manière sensiblement perpendiculaire au quatrième axe de rotation A₄.

3. Support mobile (1) selon l'une quelconque des revendications précédentes, dans lequel au moins un de ces dispositifs de déplacement (5, 5a) est réalisé avec au moins une roue de roulement et/ou avec une chenille,
un porte-axe (10), qui peut être relié au premier élément de liaison (7) ou au deuxième élément de liaison (7a), qui sert à supporter, de préférence à loger de manière rotative, la roue de roulement et/ou la chenille,
de préférence un dispositif d'entraînement (11), configuré pour l'entraînement du dispositif de déplacement (5, 5a), de préférence de la roue de roulement ou de la chenille, dans lequel de préférence le dispositif d'entraînement (11) présente un moteur électrique, dans lequel de préférence le dispositif d'entraînement (11) peut être relié de manière amovible au porte-axe (10).

4. Support mobile (1) selon l'une quelconque des revendications précédentes, dans lequel
deux de ces dispositifs de déplacement (5, 5a) sont reliés au dispositif de support (3) de manière rotative respectivement autour d'un deuxième axe de rotation A₂,
de préférence les dispositifs de déplacement (5, 5a), de manière particulièrement préférée leurs porte-axe (10, 10a), peuvent être reliés à une barre de couplage (12), peuvent être reliés de manière particulièrement préférée de telle sorte que les dispositifs de déplacement (5, 5a) peuvent être dirigés proportionnellement l'un par rapport à l'autre,
de préférence un premier dispositif de réglage (13), qui est configuré pour diriger au moins un des dispositifs de déplacement (5, 5a), de manière particulièrement préférée pour régler au moins un des porte-axe (10, 10a) et/ou pour régler la barre de couplage (12), qui peut être reliée au dispositif de support (3) et/ou au dispositif de déplacement (5, 5a).

5. Support mobile (1) selon l'une quelconque des revendications précédentes, dans lequel
au moins un des dispositifs d'articulation (8, 8a), de préférence le premier dispositif d'articulation (8), est réalisé avec au moins un élément de butée (14),
l'élément de butée (14) sert à limiter la rotation autour du quatrième axe de rotation A₄ ou autour du cinquième axe de rotation A₅,
de préférence l'élément de butée (14) est réalisé avec deux barres de traction.

6. Support mobile (1) selon l'une quelconque des revendications précédentes, dans lequel
le troisième élément de liaison (7b) est réalisé avec une couronne rotative et/ou le dispositif de support (3) est réalisé avec une plaque de montage,
de préférence la couronne rotative peut être reliée à la plaque de montage et/ou à l'élément de support d'articulation (9).

7. Support mobile (1) selon l'une quelconque des revendications précédentes, dans lequel
la fixation de tuyau (4) est réalisée avec au moins deux sections de liaison de tuyau (15, 15a),
la première section de liaison de tuyau (15) peut être reliée au premier dispositif d'articulation (8) et la deuxième section de liaison de tuyau (15a) peut être reliée au deuxième dispositif d'articulation (8a),
de préférence la première section de liaison de tuyau (15) et la deuxième section de liaison de tuyau (15a) peuvent être reliées par liaison fluidique par une troisième section de liaison de tuyau (15b) de manière particulièrement préférée en forme de tuyau flexible.

8. Support mobile (1) selon la revendication 4, avec un deuxième dispositif de réglage (13), qui est configuré pour régler un angle α, dont la première branche est orientée de manière sensiblement parallèle à un axe longitudinal d'une des sections de liaison de tuyau (15, 15a) ou d'une des tuyauteries (2, 2a) et dont la deuxième branche est orientée perpendiculairement au plan principal E₁,
dans lequel de préférence les branches de l'angle α sont agencées dans un plan angulaire E₂, qui est orienté de manière sensiblement perpendiculaire au premier axe de rotation A₁.

9. Système d'irrigation (20), configuré de préférence pour distribuer un fluide sur une surface de distribution (22), présentant au moins deux supports mobiles (1, 1 a) selon l'une quelconque des revendications 1 à 8 et au moins une première tuyauterie (2, 2a), dans lequel une première extrémité de la première tuyauterie (2, 2a) peut être reliée au premier support mobile (1) et une deuxième extrémité de la première tuyauterie (2) peut être reliée au deuxième support mobile (1a),
dans lequel de préférence le système d'irrigation (20) est configuré pour être amené d'un premier état, dans lequel les vecteurs de vitesse des deux supports mobiles (1, 1a) sont sensiblement parallèles l'un à l'autre, à un deuxième état, dans lequel les vecteurs de vitesse des deux supports mobiles (1, 1 a) ne sont pas parallèles l'un à l'autre, et inversement.

10. Système d'irrigation (20) selon la revendication 9, avec un troisième de ces supports mobiles (1 b) et une deuxième de ces tuyauteries (2, 2a),
dans lequel une première extrémité de la deuxième tuyauterie (2a) peut être reliée au deuxième support mobile (1a) et une deuxième extrémité de la deuxième tuyauterie (2, 2a) peut être reliée au troisième support mobile (1 b),
dans lequel de préférence le système d'irrigation (20) est configuré pour être amené d'un premier état, dans lequel les vecteurs de vitesse des supports mobiles (1, 1 a, 1 b) sont sensiblement parallèles l'un à l'autre, à un deuxième état, dans lequel les vecteurs de vitesse d'au moins deux des supports mobiles (1, 1 a, 1 b) ne sont pas parallèles l'un à l'autre, et inversement.

11. Système d'irrigation (20), configuré de préférence pour distribuer un fluide sur une surface de distribution (22), en particulier polygonale, présentant au moins deux supports mobiles (1, 1 a) selon l'une quelconque des revendications 1 à 8 et au moins deux tuyauteries (2, 2a), dans lequel
la première tuyauterie (2) peut être reliée à la fixation de tuyau (4) du premier support mobile (1), et peut être reliée à une tour centrale indépendante (21), qui est agencée sur la surface de distribution, et peut recevoir le fluide à distribuer de la tour centrale (21),
la deuxième tuyauterie (2) peut être reliée à la fixation de tuyau (4) du premier support mobile (1) et à la fixation de tuyau (4a) du deuxième support mobile (1 a),
dans lequel de préférence le système d'irrigation (20) est configuré pour être amené d'un premier état, dans lequel les vecteurs de vitesse des deux supports mobiles (1, 1 a) sont sensiblement parallèles l'un à l'autre, à un deuxième état, dans lequel les vecteurs de vitesse des deux supports mobiles (1, 1 a) ne sont pas parallèles l'un à l'autre, et inversement.

12. Système d'irrigation (20) selon la revendication 11, avec un troisième de ces supports mobiles (1 b) et une troisième de ces tuyauteries (2b),
dans lequel une première extrémité de la troisième tuyauterie (2b) peut être reliée au deuxième support mobile (1 a) et une deuxième extrémité de la troisième tuyauterie (2b) peut être reliée au troisième support mobile (1 b),
dans lequel de préférence le système d'irrigation (20) est configuré pour être amené d'un premier état, dans lequel les vecteurs de vitesse des supports mobiles (1, 1a, 1b) sont sensiblement parallèles l'un à l'autre, à un deuxième état, dans lequel les vecteurs de vitesse d'au moins deux des supports mobiles (1, 1a, 1b) ne sont pas parallèles à l'autre, et inversement.

13. Procédé d'actionnement d'un système d'irrigation (20) selon l'une quelconque des revendications 9 à 12, dans lequel le système d'irrigation (20) présente un dispositif de commande (23), dans lequel une origine du système de coordonnées est définie dans la surface de distribution sur laquelle le fluide doit être distribué, dans lequel avec au moins une des étapes
S1 prescription d'un vecteur de vitesse pour un des supports mobiles (1, 1a, 1b) en fonction d'un premier vecteur de position du support mobile (1, 1a, 1b), dans lequel le premier vecteur de position indique la position du support mobile (1, 1a, 1b) par rapport à l'origine du système de coordonnées, de préférence à un premier moment,
S2 prescription du vecteur de vitesse pour un des supports mobiles (1, 1a, 1b) à une première position, qui peut être décrite par le premier vecteur, en fonction du premier vecteur de position et d'un deuxième vecteur de position, dans lequel le deuxième vecteur de position indique la position du support mobile (1, 1 a, 1 b) par rapport à une origine du système de coordonnées à un moment ultérieur au premier moment,
S3 prescription d'une vitesse de déroulement, à laquelle un de ces dispositifs de déplacement (5, 5a) doit se dérouler autour du troisième axe de rotation A₃, et/ou d'un angle de direction du dispositif de déplacement (5, 5a) en fonction du vecteur de vitesse pour le support mobile (1, 1a, 1b), en particulier selon l'étape S1 ou S2, dans lequel l'angle de direction entre le troisième axe de rotation A₃ du dispositif de déplacement (5, 5a) et le plan principal E₁ doit être mesuré,
S4 réduction de la valeur du vecteur de vitesse d'un premier de ces supports mobiles (1, 1 a, 1 b), lorsque la valeur du vecteur de vitesse d'un deuxième de ces supports mobiles (1, 1 a, 1 b) dépasse une valeur limite, dans lequel de préférence le deuxième support mobile est davantage éloigné de l'origine du système de coordonnées que le premier support mobile, en particulier selon l'étape S1 ou S2,
S6 prescription d'un angle entre le vecteur de vitesse du deuxième support mobile et un rayon partant de l'origine du système de coordonnées par le vecteur de position du deuxième support mobile en fonction de l'angle entre le vecteur de position du premier support mobile et le rayon, en particulier selon l'étape S1 ou S2,
de préférence avec
S5 augmentation d'un flux de fluide par une de ces tuyauteries (2, 2a), de préférence proportionnellement, avec une plus grande valeur du vecteur de vitesse d'un de ces supports mobiles (1, 1a, 1b), en particulier de manière réversible, en particulier selon l'étape S1 ou S2.

14. Procédé d'équipement ultérieur d'un système d'irrigation existant, présentant au moins une tuyauterie et au moins une tour mobile pour supporter et déplacer une tuyauterie, avec un support mobile (1, 1 a, 1 b) selon l'une quelconque des revendications 1 à 8, avec au moins une des étapes suivantes :
S7 séparation d'une de ces tuyauteries d'une de ces tours mobiles,
S8 mise à disposition d'un de ces supports mobiles (1, 1a, 1b), dont la fixation de tuyau (4), en particulier leurs sections de liaison de tuyau (15, 15a), sont configurées pour le raccordement à au moins une de ces tuyauteries,
S9 raccordement, en particulier par liaison fluidique, d'au moins une de ces tuyauteries à la fixation de tuyau (4), en particulier à une de ces sections de liaison de tuyau (15, 15a).

15. Utilisation d'un support mobile (1, 1 a, 1 b) selon l'une quelconque des revendications 1 à 8 avec un système d'irrigation existant, de préférence pour compléter le système d'irrigation existant.
